# EUROPEAN PATENT SPECIFICATION

(11) **EP 0 608 769 B1**
(45) Date of publication and mention of the grant of the patent: **23.12.1998**
(21) Application number: 94100813.8
(22) Date of filing: 20.01.1994
(51) Int. Cl.: H02P 6/00

(54) **Control device for air conditioner**
Kontrolleinrichtung für Luftkonditionierer
Dispositif de contrôle pour conditionneur d'air

(30) Priority: 21.01.1993 JP 26277/93; 25.01.1993 JP 28654/93
(43) Date of publication of application: 03.08.1994
(73) Proprietor: FUJITSU GENERAL LIMITED, Kawasaki-shi, Kanagawa-ken (JP)
(72) Inventor: TODA, Koichi, c/o Fujitsu General Ltd,, Kanagawa-ken, (JP); OGAWA, Yoshio, c/o Fujitsu General Ltd,, Kanagawa-ken, (JP)
(74) Representative: Riederer Freiherr von Paar zu Schönau, Anton

(56) References cited:
- EP-A- 0 179 484
- EP-A- 0 501 131
- GB-A- 2 243 504

## Description

### Field of the invention

The present invention relates to a control device for an air conditioner having a brushless motor, and more specifically to a control device for an air conditioner for controlling a brushless motor for driving a compressor and a blower of the air conditioner, and further more specifically to a control device for an air conditioner in which one of a compressor or a blower is driven by an induction motor while the other is driven by a brushless motor, the latter one being a motor containing a magnetic and particularly a permanent magnetic rotor.

Such control device comprises at least two motors, one for driving a compressor and one for driving a blower of an air conditioner, one of the motors being a brushless motor; a microcomputer for controlling said motors; position detecting means, with respect to said brushless motor, detecting the position of the rotor of said brushless motor to output a position detecting signal; drive means for said brushless motor composed of a first set comprising a plurality of semiconductor switches for switching the connection between a positive terminal of a DC power source and a plurality of windings of said brushless motor, and a second set comprising a plurality of semiconductor switches for switching the connection between said plurality of windings and a negative terminal of the DC power source; drive signal generating means wherein with respect to said respective brushless motor, a position detecting signal of said brushless motor is inputted to said microcomputer, the switches of the drive means of said brushless motor are turned on and off so that the connection between the positive terminal und the negative terminal of said DC power source and the windings of said brushless motor is switched, and the DC voltage from said DC power source is converted into an AC voltage, which is applied to said plurality of windings to rotate said brushless motor in response to said position detecting signal; chopping signal generating means having a predetermined ratio of on to off for turning on/off the drive signals, the on-portions of the drive signals turning on the semiconductor switches constituting at least one of the first or second sets of said drive means, chopping of said drive signals by said semiconductor switches taking place at a higher frequency than that of the drive signals; rotation-control taking place by the chopped drive signals and other drive signals, if any, being outputted from said microcomputer, the semiconductor switches of the first set and second set of said drive means being turned on as controlled, the semiconductor switches of at least one of the sets being turned on/off by the chopping signals at the time of said on, and the AC voltage derived from the DC voltage from said DC power source being at the same time of being converted into the AC voltage subjected to chopping and being then applied to the windings of said brushless motor to rotation-control said brushless motor.

### Discussion of prior art

As examples of the prior art, conventional air conditioners comprise a first three-phase brushless motor for driving the compressor and a second three-phase brushless motor for driving the blower, or a three-phase induction motor on one hand and a three-phase brushless motor on the other. A microcomputer performs predetermined inputs/outputs relative to input/output circuits necessary for the control of the motors. These circuits constitute a control circuit, comprising a position detecting circuit for detecting the position of the rotor of the brushless motor, drive circuits including a commutation circuit, and a chopping circuit. The microcomputer inputs the position detecting signal from the position detecting circuit to rotate the brushless motor in response to said position detecting signal, and for that purpose outputs drive signals to the drive circuits, and further outputs a chopping signal to the chopping circuit which performs the chopping of the current supplying the brushless motor, so as to produce a lower resulting average current. In order to rotate the induction motor, a drive circuit is controlled to output a respective drive signal. In order to set the induction motor to a predetermined speed, the microcomputer causes the drive circuit to supply a three-phase alternating current with a predetermined resulting voltage and a predetermined frequency.

In these prior-art control circuits for the air conditioner, in order to control the motors for driving the compressor and the blower necessary for the air conditioner, two control means, i. e., the microcomputer and these circuits, are necessary, and switching of the supply voltage of the brushless motor demands some switching power. This complicates the control circuits and the power circuits of the air conditioner and increases the number of parts, resulting in a higher cost and a larger size of the air conditioner.

Moreover, controlling the brushless motor is determined merely by the command of a speed from the microcomputer. This leads to a problem in that the speed of the brushless motor varies with the variation of loads, and the actual number of revolutions is not in coincidence with the number of revolutions demanded by the respective command.

As an example for the prior art, EP-A-501131 discloses a control device for an air conditioner as stated above and in the preamble of claims 1, 2, wherein a control section drives an indoor fan through a drive circuit and another control section drives an outdoor fan through a different drive circuit. The control sections are connected to a component of a central processing unit, respectively. However, further details are not explained.

### Summary of the invention

It is an object of the present invention to provide an air conditioner wherein at least the control circuit and the power circuit for driving the compressor and the blower can be simplified, a microcomputer as one control means will suffice to control the air conditioner, as a consequence of which the number of parts can be reduced to lower the cost of and miniaturize the air conditioner, and the number of revolutions of the brushless motor can be made constant at a predetermined speed even if the loads are varied.

According to a first embodiment of the present invention, the control device is characterized in that the other motor is also a brushless motor rotation-controlled by the microprocessor and means equal to the ones of the first motor and similarly in signal-exchange as the first motor. In controlling the brushless motor, the drive signals for turning on as desired the plurality of switches of the drive means so that the brushless motor is rotated in response to the position detecting signal from the position detecting means of the brushless motor are generated in the microcomputer. The microcomputer calculates the number of revolutions of the brushless motor on the basis of the position detecting signal inputted and varies the ratio of on to off of the chopping signal so that the calculated number of revolutions is a predetermined number of revolutions.

According to a second embodiment of the present invention, the control device is characterized in that the other motor is an induction motor supplied by a control device having a plurality of semiconductor switches and comprising drive means supplying said induction motor, driven by converting a DC voltage into an AC voltage by turning on and off said semiconductor switches which are turned on and off as controlled by said microcomputer to output a drive signal resulting from converting said DC voltage into the AC voltage having a predetermined voltage and a predetermined frequency for rotation control. In controlling the induction motor, the plurality of switches constituting the first drive means are turned on/off as desired by the first drive signal outputted from the microcomputer, a DC voltage is converted into an AC voltage of a predetermined voltage and a predetermined frequency, which is applied to a plurality of winding of the induction motor, and the induction motor is controlled at a predetermined number of revolutions.

As described above, according to the control device for an air conditioner in accordance with the present invention, since the motor for driving the compressor and the blower necessary for the air conditioner is controlled by the microcomputer likewise necessary for the control of the air conditioner, only the microcomputer will suffice as control means. Further, since a switching power for obtaining a variable DC voltage is not necessary, the control circuit and the power circuit may comprise a simple structure, enabling reduction in the number of parts, lower cost and miniaturization of the air conditioner.

Moreover, since the number of revolutions of the brushless motor is calculated to control the latter to be rotated at a predetermined number of revolutions, the number of revolutions of the brushless motor is not varied due to the variation of loads, and the brushless motor can be controlled constant at a predetermined speed (number of revolutions).

### Brief description of the drawings

- Fig. 1: is a schematic block diagramm of a control circuit for an air conditioner showing a first embodiment of the present invention;
- Fig. 2: is a time chart for explaining a control method for a brushless motor used for the air conditioner shown in Fi. 1;
- Fig. 3: is a flow chart for explaining a control method for a brushless motor used for the air conditioner shown in Fig. 1;
- Fig. 4: is a block diagram showing schematic portions of a microcomputer for controlling the air conditioner shown in Fig. 1;
- Fig. 5: is a time chart for explaining the operation of the microcomputer shown in Fig. 4;
- Fig. 6: is a block diagram of schematic portions of a microcomputer for controlling an air conditioner showing a modified embodiment of the present invention;
- Fig. 7: is a schematic block diagram of a control circuit for an air conditioner showing a second embodiment of the present invention;
- Fig. 8: is a time chart for explaining the operation of a control circuit for the air conditioner shown in Fig. 7;
- Fig. 9: is a schematic partial block diagram of a microcomputer of a control circuit for the air conditioner shown in Fig. 7;
- Fig. 10: is a time chart for explaining the operation of the microcomputer shown in Fig. 9;
- Fig. 11: is a schematic block diagramm of a control circuit for a first conventional air conditioner;
- Fig. 12: is a time chart for explaining a control method for a brushless motor used for the air conditioner shown in Fig. 11;
- Fig. 13: is a time chart for explaining a control method for a brushless motor used for the air conditioner shown in Fig. 11;
- Fig. 14: is a schematic block diagramm of a control circuit for a second conventional air conditioner;
- Fig. 15: is a time chart for explaining the operation of a control circuit for the air conditioner shown in Fig. 14; and
- Fig. 16: is a time chart for explaining the operation of a control circuit for the air conditioner shown in Fig. 14.

### Description of prior art

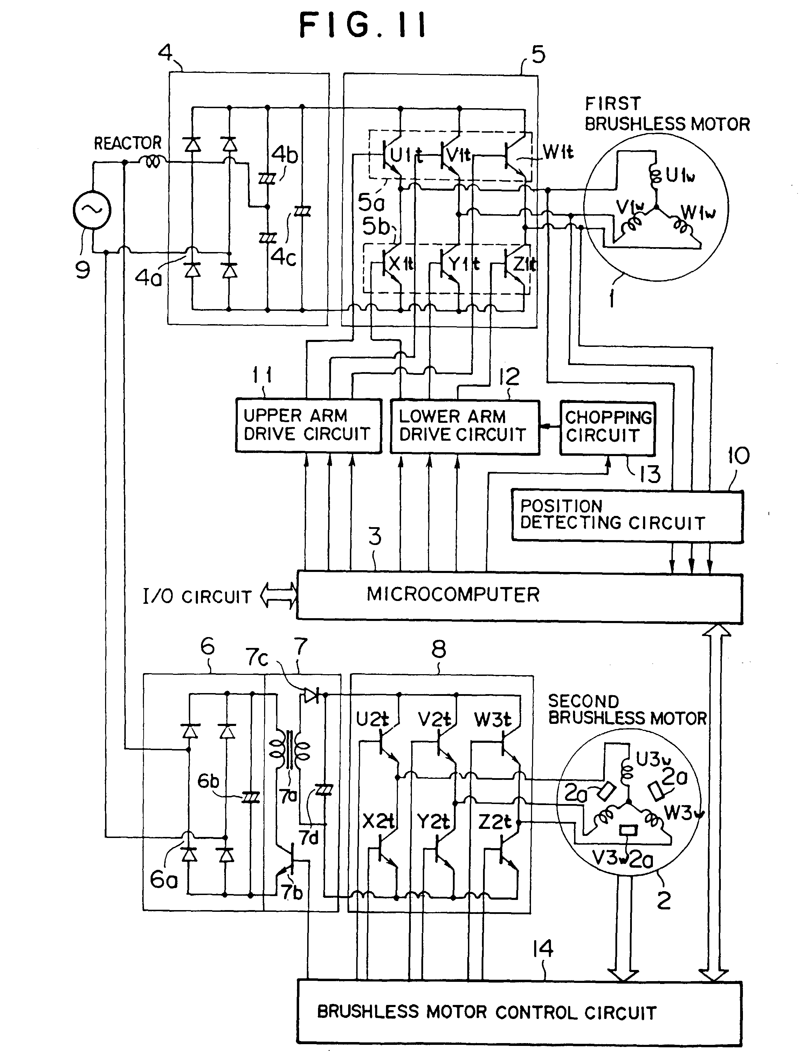

As an example of a conventional first air conditioner, for instance, there is an air conditioner comprising a first brushless motor 1 (a three-phase brushless motor) for driving a compressor, a second brushless motor 2 (a three-phase brushless motor) for driving a blower, and a microcomputer 3 for performing a predetermined input/output relative to an input/output circuit necessary for the control of an outdoor side of the air conditioner to control the outdoor side, as shown in Fig. 11.

In Fig. 11, this air conditioner comprises a first power circuit 4 and a first drive circuit 5 for driving the first brushless motor, and a second power circuit 6, a third power circuit 7 and a second drive circuit 8 for driving the second brushless motor 2.

The first power circuit 4 comprises a commutation circuit 4a, a voltage doubler circuit 4b, a smoothing condenser 4c, and so on. A commercial AC power 9 through a reactor is converted into a DC power, and a predetermined DC voltage is supplied to the first drive circuit 5. The first drive circuit 5 is composed of a first set, termed an upper arm 5a, comprising three transistors U1t, V1t and W1t for switching the connection between a positive terminal of the first power circuit 4 and three-phase windings U1w, V1w and W1w of the first brushless motor 1, and a second set, termed a lower arm 5b, comprising three transistors X1t, Y1t and Z1t for switching the connection between the three-phase windings U1w, V1w and W1w and a negative terminal of the first power circuit 4.

This air conditioner further comprises a position detecting circuit 10 for detecting a position of the rotor of the first brushless motor 1, an upper arm drive circuit 11, a lower arm drive circuit 12, and a chopping circuit 13. The position detecting circuit 10 comprises, for example, an integrator means and a comparator means, the position detecting circuit 10 being adapted to input terminal voltages of the three-phase windings U1w, V1w and W1w of the first brushless motor 1, and to output a position detecting signal for detecting the position of the rotor of the first brushless motor 1.

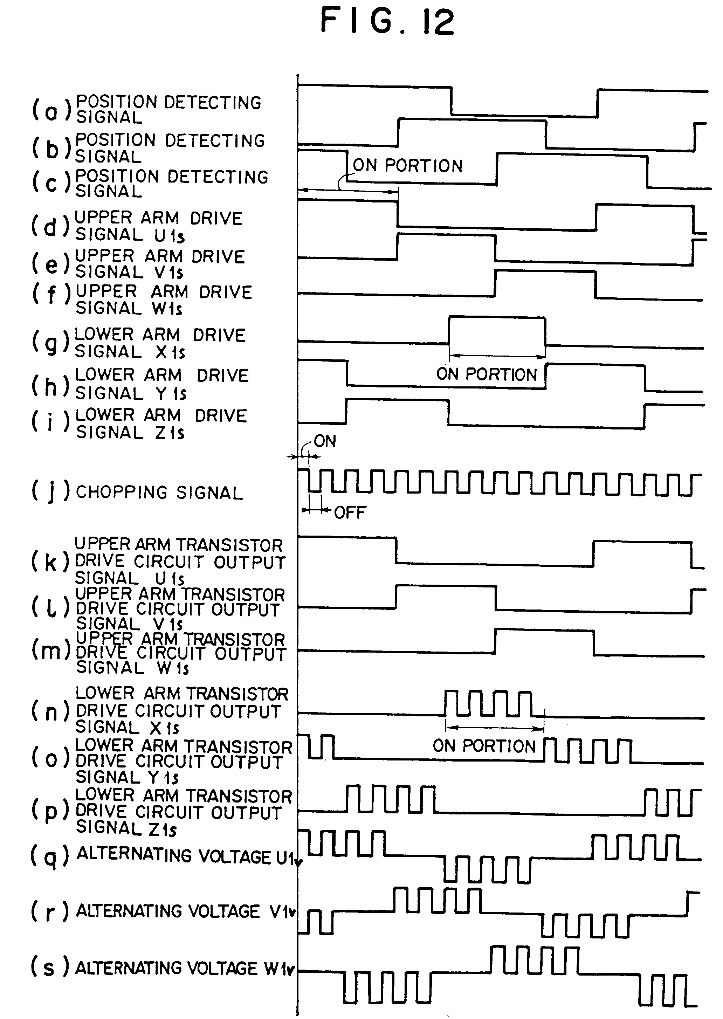

The microcomputer 3 inputs the position detecting signal (shown in Figs. 12(a) to 12(c)) from the position detecting circuit 10 to rotate the first brushless motor 1 in response to said position detecting signal, and for that purpose, the microcomputer 3 outputs drive signals U1s, V1s and W1s, and X1s, Y1s and Z1s shown in Figs. 12(d) to 12 (i) to the upper arm drive circuit 11 and the lower arm drive circuit 12 in order to turn on, as desired, the transistors U1t, V1t and W1t of the upper arm 5a and the transistors X1t, Y1t and Z1t of the lower arm 5b in the first drive circuit 5.

The microcomputer 3 further outputs a chopping signal shown in Fig. 12(j) to the chopping circuit 13. The chopping circuit 13 performs the chopping of the power for the lower arm drive circuit 12 in response to a chopping signal in order to perform the chopping, as desired, of the output signal of the lower arm drive circuit 12, for example, in response to the chopping signal being inputted. Signals X1s, Y1s and Z1s by which on-portions of drive signals being inputted as shown in Figs. 12(n) to 12(p) are outputted from the lower arm drive circuit 12 to the transistors X1t, Y1t and Z1t of the lower arm 5b in the first drive circuit 5. The upper arm drive circuit 11 outputs signals U1s, V1s and W1s shown in Figs. 12(k) to 12(m) to the transistors U1t, V1t and W1t of the upper arm 5a in the first drive circuit 5 in response to the drive signals being inputted.

The transistors U1t, V1t, W1t, X1t, Y1t and Z1t of the upper arm and lower arm in the first drive circuit 5 are turned on as desired by the output signals of the upper arm drive circuit 11 and the lower arm drive circuit 12 to switch the connection between the positive terminal of the first power circuit 4 and the three-phase windings U1w, V1w and W1w of the first brushless motor 1. Thereby, the DC voltage from the first power circuit 4 is converted into the AC voltage, which is applied to the three-phase winding of the first brushless motor 1, and at the same time, the chopping drive is effected by the output signal of the lower arm drive circuit 12 when the transistors of the lower arm 5b are turned on. Therefore, AC voltages U1s, V1s and W1s subjected to chopping shown in Figs. 12(q) to 12(s) are applied to the three-phase windings U1w, V1w and W1w of the first brushless motor 1.

In the microcomputer 3, the ratio of on to off of a chopping signal outputted to the chopping circuit 13 is varied in order to set the number of revolutions of the first brushless motor 1 to a predetermined number of revolutions. The ratio of on to off of the chopping of AC voltages applied to the three-phase windings U1w, V1w and W1w of the first brushless motor 1 is varied, and the applied voltages thereof are varied to control the first brushless motor 1.

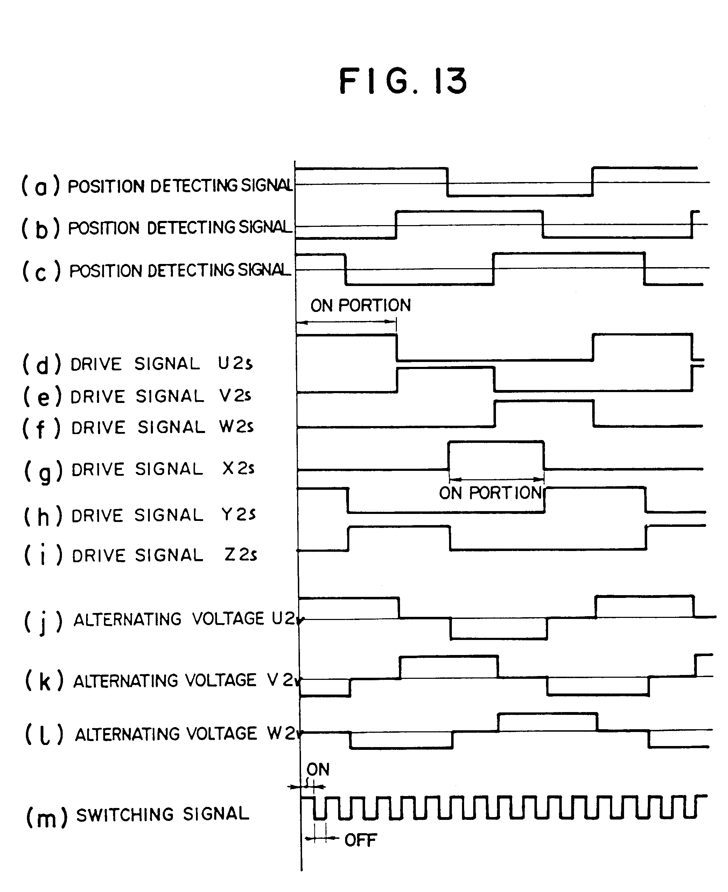

On the other hand, the second power circuit 6 comprises a commutation circuit 6a, a smoothing condenser 6b and so on, in which the commercial AC power 9 is converted into a DC power to output a predetermined DC voltage. The third power circuit 7 is a switching circuit composed of a transformer 7a, a transistor 7b, a diode 7c, a smoothing condenser 7d and so on, in which the DC voltage from the second power circuit 6 is inputted and subjected to switching to convert it into a variable DC voltage, which is supplied to the second drive circuit 8 composed of six transistors U2t, V2t, W2t, X2t, Y2t and Z2t. The second brushless motor 2 is interiorly provided with a position detecting sensor (a hall element) 2a, which detects the position of the rotor of the second brushless motor 2 to output position detecting signals shown in Figs. 13(a) to 13 (c). A brushless motor control circuit 14 for inputting a position detecting signal from the hall element 2a is composed, for example, of a brushless motor control exclusive use IC and so on, which detects a position of a rotor of the second brushless motor 2 in response to an input position detecting signal to output drive signals U2s, V2s, W2s, X2s, Y2s and Z2s shown in Figs. 13(d) to 13(i) to the transistors U2t, V2t, W2t, X2t, Y2t and Z2t of the second drive circuit 8. The transistors of the second drive circuit 8 are turned on as desired by the aforesaid drive signals, and the variable DC voltages from the power circuit 7 to be inputted into the second drive circuit 8 are converted into AC voltages U2s, V2s and W2s shown in Figs. 13(j) to 13(1), which are applied to the three-phase windings U2w, V2w and W2w of the second brushless motor 2 to rotate the second brushless motor 2.

The microcomputer 3 further outputs a command of the number of revolutions (speed) to the second brushless motor 2. The brushless motor control circuit 14 which inputs the command of the number of revolutions outputs a switching signal for switching-controlling the transistor 7b of the switching power circuit which is the third power circuit 7 (See Fig. 13(m)). The brushless motor control circuit 14 varies the ratio of on to off of the switching signal in response to the command of the number of revolutions inputted, and varies the DC voltage outputted from the third power circuit 7. This variable DC voltage is converted into a variable AC voltage, and applied to the three-phase windings U2w, V2w and W2w of the second brushless motor 2. In this manner, the AC voltages applied to the three-phase windings are varied whereby the second brushless motor 2 is variably controlled in speed.

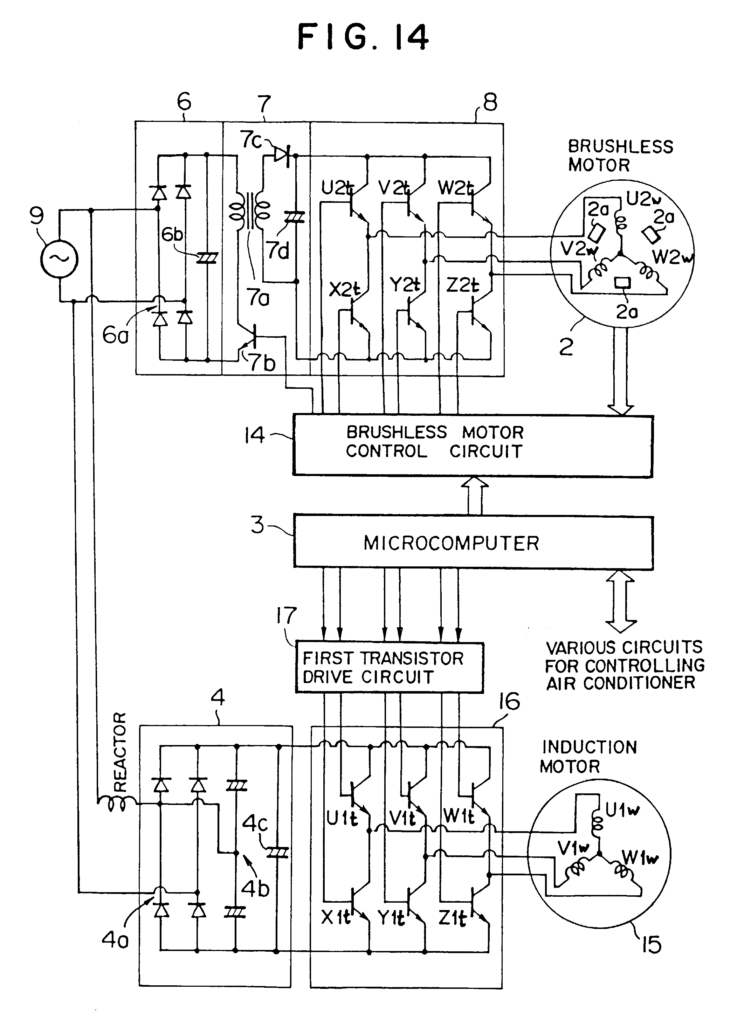

Next, as an example of a conventional second air conditioner, as motors for driving a compressor and a blower, there are used a three-phase induction motor 15 on one hand, and the three-phase brushless motor 2 on the other. In Fig. 14, the same parts as and parts corresponding to those shown in Fig. 11 are indicated by the same reference numerals, and a duplicate description is omitted.

In order to rotate the induction motor 15, transistors of a first drive circuit 16 are controlled to output a first drive signal.

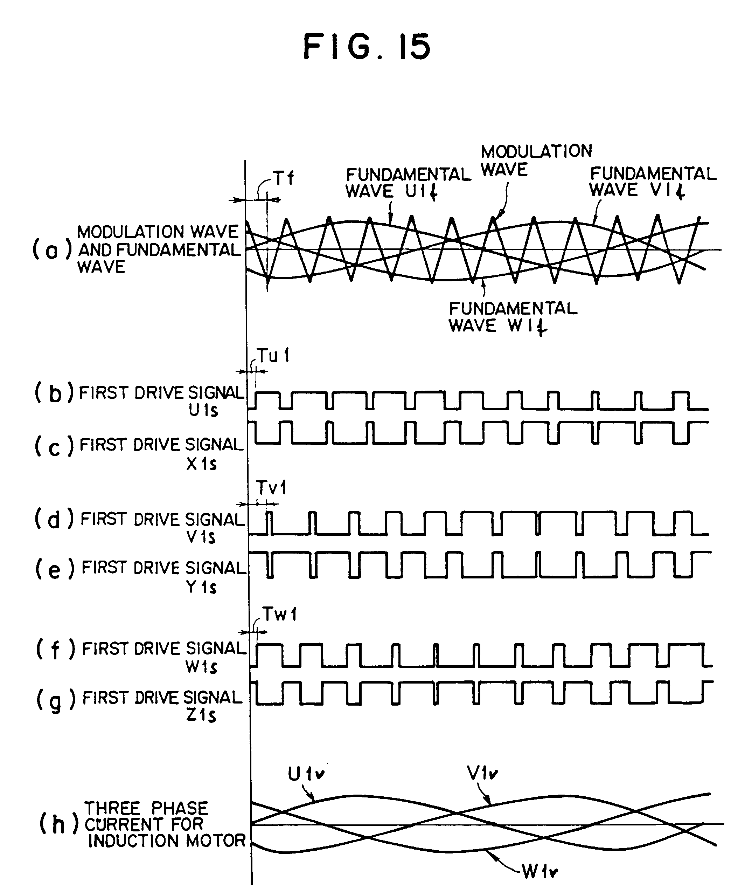

In controlling the induction motor 15, the microcomputer 3 obtains, every half-period Tf of modulation waves shown in Fig. 15, intersections between said modulation waves and fundamental waves U1s, V1s and W1s, obtains the times Tu1, Tv1 and Tw1 to the intersections shown in Figs. 15(b), 15(d) and 15(f) on the basis of the thus obtained intersections, and generates and outputs six PWM signals U1s, X1s, V1s, Y1s, W1s and Z1s (X1s, Y1s and Z1s are reversed signals of U1s, V1s and W1s) as first drive signals on the basis of the thus obtained Tu1, Tv1 and Tw1 (see Figs. 15(b) to 15(g)). The first drive signals (PWM signals) U1s, X1s, V1s, Y1s, W1s and Z1s outputted form the microcomputer 3 are inputted to a transistor drive circuit 17. The transistor drive circuit 17 turns on and off the six transistors U1t, X1t, V1t, Y1t, W1t and Z1t which constitute the first drive circuit 16 in response to the inputted drive signals (PWM signals) U1s, X1s, V1s, Y1s, W1s and Z1s. The transistors of the first drive circuit 16 are controlled to be turned on and off in response to the first drive signal outputted from the microcomputer 3 whereby DC voltages inputted from the first power circuit 4 into the first drive circuit 16 are converted into three-phase alternating currents U1s, V1s and W1s, which are applied to three-phase windings U1w, V1w and W1w of the induction motor 15 to rotate the induction motor 15. (See Fig. 15(h)).

At this time, in order to set the induction motor 15 to a predetermined number of revolutions (speed), the microcomputer 3 causes the fundamental waves U1s, V1s and W1s to have a predetermined crest value and a predetermined frequency according to a predetermined number of revolutions of the induction motor 15 whereby the intersections between the modulation waves and the fundamental waves U1s, V1s and W1s are varied and the Tu1, Tv1 and Tw1 are varied, by which variation, pulse widths of the PWM signals U1s, X1s, V1s, Y1s, W1s and Z1s as the first drive signals outputted from the microcomputer 3 are varied (said pulse widths being on/off timing). Thereby, a three-phase alternating current supplied from the first drive circuit 16 to the induction motor 15 takes a predetermined voltage and a predetermined frequency, and the induction motor 15 is controlled at a predetermined number of revolutions.

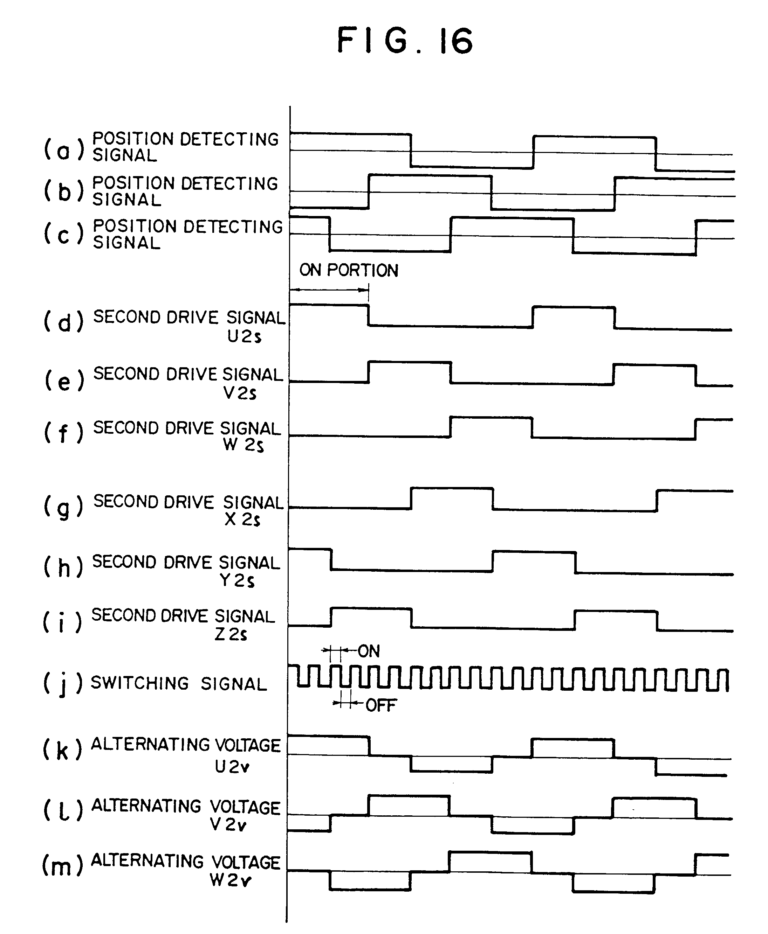

On the other hand, as shown in Fig. 16, in controlling the brushless motor 2, position detecting signals (shown in Figs. 16(a) to 16(c)) from the internal hall element 2a for detecting the position of the rotor of the brushless motor 2 are inputted into the brushless motor control circuit 14. Then, in the brushless motor control circuit 14, the transistors U2t, X2t, V2t, Y2t, W2t and Z2t of the second drive circuit 8 are turned on as desired so that the brushless motor 2 may be rotated in response to the thus inputted position detecting signals. Variable DC voltages inputted from the third power circuit 7 to the second drive circuit 8 are converted into three-phase AC voltages U2, V2 and W2, which are applied to the three-phase winding of the brushless motor 2 to rotate the latter. (See Figs. 16(k) to 16(m)).

In the brushless motor control circuit 14, a switching signal for switching-controlling a transistor 7b of the third power circuit 7 is outputted (see Fig. 16(j)), and the ratio of on to off of the switching signal is varied in accordance with the command of the number of revolutions of the brushless motor 2. Thereby, the output DC voltage of the third power circuit 7 is varied and inputted into the second drive circuit 8. The thus varied DC voltage is converted into a three-phase AC voltage, the three-phase AC voltage applied to the three-phase winding of the brushless motor 2 is varied, the number of revolutions of the brushless motor 2 is varied, and the brushless motor 2 is controlled on the basis of the command of the number of revolutions from the microcomputer 3.

However, in the above-described control method for the air conditioner, in order to control the motor for driving a compressor and a blower necessary for the air conditioner, two control means, i.e., the microcomputer 3 and the brushless motor control circuit 14 are necessary, and a switching power (the third power circuit 7) for varying and outputting a DC voltage for driving the second brushless motor 2 is necessary. This complicates the control circuits and the power circuits of the air conditioner and increases the number of parts, resulting in a higher cost and a larger size of the air conditioner.

Moreover, in controlling the brushless motor 2, the ratio of on to off of the switching signal is determined merely by the command of the number of revolutions from the microcomputer 3, and the value of the DC voltage outputted from the switching power (the third power circuit 7) is determined. This leads to a problem in that the number of revolutions of the brushless motor 2 is varied with the variation of loads, and the actual number of revolutions is not in coincidence with the number of revolutions caused by the command of the number of revolutions, namely, the brushless motor 2 is not rotated as determined by the command of the number of revolutions.

### Description of the preferred embodiments

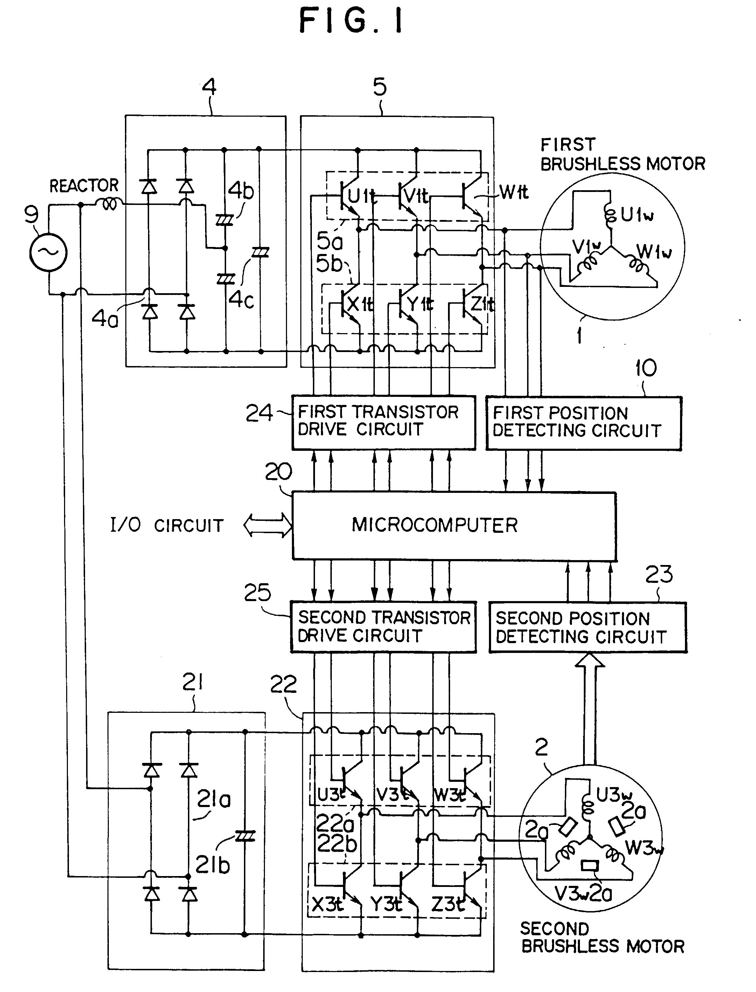

A first embodiment of the present invention will be described hereinbelow with reference to Figs. 1 to 6. It is to be noted that in these drawings, the same parts as and parts corresponding to those shown in Fig. 11 are indicated by the same reference numerals and a duplicate description will be omitted.

Referring to Fig. 1, in a control circuit for an airconditioner, three-phase brushless motors are used as first and second brushless motors which are a plurality of brushless motors for driving a compressor and a blower necessary for the airconditioner, the blower is an outdoor blower, and the first and second brushless motors 1 and 2 for driving the compressor and the blower are controlled by a microcomputer 20.

The control circuit for the airconditioner is provided with a second power circuit 21 comprising a commutation circuit 21a for converting a commercial AC power 9 into a DC power and a smoothing condenser 21b, said second power circuit 21 supplying a predetermined DC voltage to a second drive circuit 22. The second drive circuit 22 is composed of an upper arm 22a comprising three transistors U3t, V3t and W3t for switching the connection between a positive terminal of the second power circuit 21 and three-phase windings U3w, V3w and W3w of the second brushless motor 2, and a lower arm 22b comprising three transistors X3t, Y3t and Z3t for switching the connection between three-phase windings U3w, V3w and W3w and a negative terminal of the second power circuit 21.

The control circuit for the air conditioner comprises a second position detecting circuit 23 comprising, for example, comparator means and amplifying means. It inputs a signal from a position detecting sensor (a hall element) 2a provided interiorly of the second brushless motor 2 and outputs a position detecting signal of the rotor of the second brushless motor 2 to the microcomputer 20.

In Fig. 1, a first transistor drive circuit 24 comprises a combination of the upper arm drive circuit 11 and the lower arm drive circuit 12 shown in Fig. 11. A second transistor drive circuit 25 has the structure similar to that of the first transistor drive circuit 24.

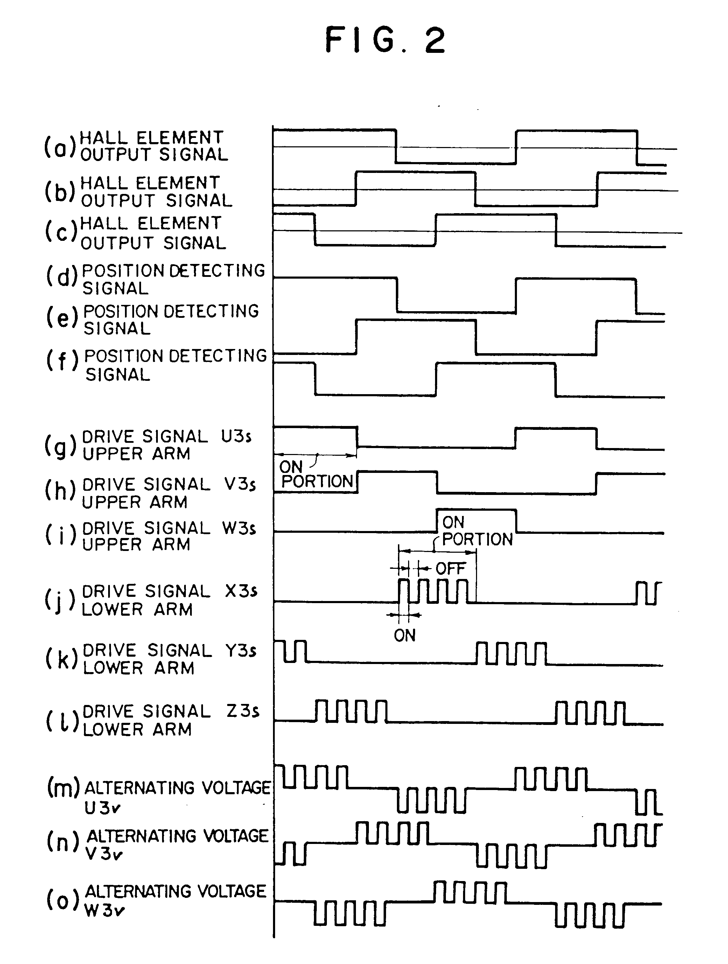

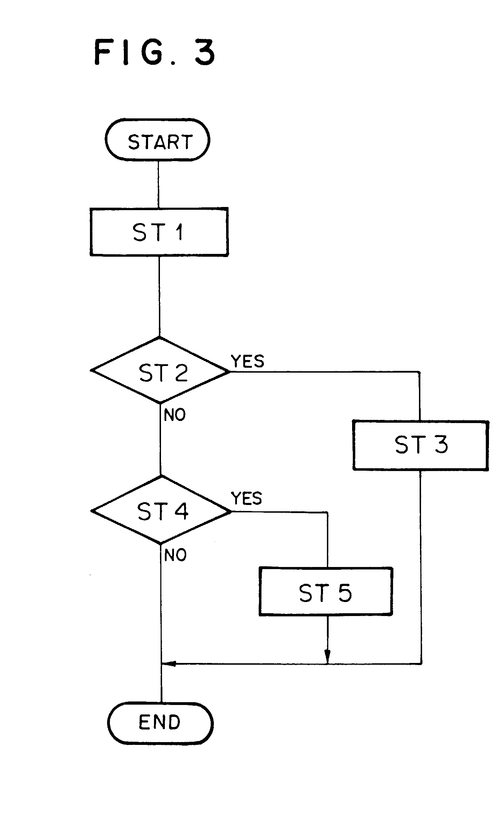

Next, the control method applied to the control circuit for the air conditioner constructed as described above will be described with reference to a time chart shown in Fig. 2 and a flow chart shown in Fig. 3.

Inputted into the second position detecting circuit 23 are output signals (shown in Figs. 2(a) to 2(c)) from the hall elements 2a interiorly of the second brushless motor 2 for detecting the position of the rotor of the second brushless motor 2, and outputted from the second position detecting circuit 23 are position detecting signals shown in Figs. 2(d) to 2(f).

The microcomputer 20 inputs the position detecting signals, turns on as desired the transistors U3t, V3t, W3t, X3t, Y3t and Z3t of the second drive circuit 22 so that the second brushless motor 2 is rotated in response to the position detecting signals, switches the connection between the positive terminal and the negative terminal of the second power circuit 21 and the three-phase windings U3w, V3w and W3w of the second brushless motor 2, converts the DC voltage from the second power circuit 21 into an AC voltage from the second power circuit unit 21 to apply it to the three-phase windings U3w, V3w and W3w, and generates the drive signals U3s, V3s, W3s, X3s, Y3s and Z3s for rotating the second brushless motor 2 at a speed determined by the microcomputer 20.

At this time, in the microcomputer 20, on-portions of the drive signals for turning on as desired the transistors X3t, Y3t and Z3t of at least one arm of the upper arm 22a or the lower arm 22b, for example, the lower arm 22b of the generated drive signals are formed into chopping signals having a predetermined ratio of on to off for turning on/off the transistors X3t, Y3t and Z3t of the lower arm 22b at a higher frequency than that of the drive signals within the microcomputer 20, and the drive signals X3s, Y3s and Z3s (shown in Figs. 2(j) to 2(1)) in which the on-portions are formed into the chopping signals and other drive signals (shown in Figs. 2(g) to 2(i)) are outputted from the computer 20.

The transistors U3t, V3t, W3t, X3t, Y3t and Z3t of the second drive circuit 22 are turned on as desired by the drive signals U3s, V3s, W3s, X3s, Y3s and Z3s outputted from the microcomputer 20 through the second transistor drive circuit 25, and at the same the transistors X3t, Y3t and Z3t of the lower arm 22b are turned on/off by the chopping signals of the drive signals when the transistors X3t, Y3t and Z3t are turned on.

Thereby, the DC voltage from the second power circuit 21 is converted into an AC voltage and simultaneously subjected to chopping so that the AC voltage is formed into a predetermined voltage. AC voltages U3v, V3v and W3v shown in Figs. 2(m) to 2(o) are applied to the three-phase windings U3w, V3w and W3w of the second brushless motor 2 for rotation-control of the second brushless motor 2.

On the other hand, the first brushless motor 1 is also controlled in its rotation in a manner similar to the above by the microcomputer 20. The microcomputer 20 inputs the position detecting signals outputted from the first position detecting circuit 10. The drive signals U1s, V1s, W1s, X1s, Y1s and Z1s for turning on as desired the transistors U1t, V1t, W1t, X1t, Y1t and Z1t of the first drive circuit 5 are generated within the microcomputer 20 so that the first brushless motor 1 is rotated in response to the position detecting signal.

Out of the thus generated drive signals U1s, V1s, W1s, X1s, Y1s and Z1s, on-portions of the drive signals X1s, Y1s and Z1s for turning on as desired the transistors X1t, Y1t and Z1s of at least one arm, for example, the lower arm 5b of the upper and lower arms 5a and 5b of the first drive circuit 5 are formed into chopping signals having a predetermined ratio of an to off for turning on/off the transistors X1t, Y1t and Z1t at higher frequency than that of the drive signals within the microcomputer 20, and these drive signals U1s, V1s, W1s, X1s, Y1s and Z1s are outputted from the microcomputer 20.

The transistors U1t, V1t, W1t, X1t, Y1t, and Z1t of the first drive circuit 5 are turned on as desired by the thus outputted drive signals U1s, V1s, W1s, X1s, Y1s and Z1s through the first drive circuit 24, and at the same time, the transistors X1t, Y1t and Z1t are subjected to chopping when said transistors are turned on. Thereby, AC voltages U1v, V1v and W1v in which DC voltages from the first power circuit 4 are converted and at the same time subjected to chopping are applied to the three-phase windings U1w, V1w and W1w of the first brushless motor 1 for rotation control of the first brushless motor.

While in the above-described embodiment, the on-portions of the drive signals for driving the transistors of the lower arms 5b and 22b of the first and second drive circuits 5 and 22 are formed into the chopping signals, it is to be noted that the mode thereof is not limited to the above but on-portions of the drive signals of the transistors of the upper arms 5a and 22a may be formed into chopping signals or on-portions of the drive signals of both transistors of the lower arms 5b and 22b may be formed into chopping signals.

The position detecting means of the first and second brushless motors are not limited to those shown in the above-described embodiment but other means may be employed as long as they are means for detecting a position of a rotor of the first and second brushless motors to output position detecting signals. For example, integration means and comparator means which constitute the first position detecting means 10 may be provided interiorly of the microcomputer 20 so that terminal voltages are inputted as position detecting signals into the microcomputer 20. In this case, the three-phase windings U1w, V1w and W1w of the first brushless motor 1 comprise the position detecting means.

Alternatively, integration means and amplification means which constitute the second position detecting circuit 23 may be provided interiorly of the microcomputer 20 so that hall elements (the position detecting sensors 2a) are used as position detecting means and the output signals thereof are inputted as position detecting signals into the microcomputer 20. Alternatively, the hall element 2a and a hall IC provided with the second position detecting circuit 23 may be used as second position detecting means and the output signals thereof are inputted as position detecting means. Alternatively, the second position detecting means may be made similar to the method of the first position detecting means.

As the DC power for driving the first and second brushless motors 1 and 2, for example, a single DC power (commonly used) will suffice. In this case, the first and second drive circuits 5 and 22 may be connected in parallel on the output side of the first power circuit 4. While in the above embodiment, the blower comprises an outdoor blower, it is to be noted that it may comprise an indoor blower.

Further, while in the above-described embodiment, two brushless motors controlled by the microcomputer 20 have been used, it is to be noted that even one are even more than two brushless motors can be similarly controlled. In case of using more than two brushless motors, the brushless motors for driving, for example, a compressor, an indoor blower and an outdoor blower may be driven by the microcomputer in the method described in the above embodiment.

While in the above-described embodiment, the microcomputer 20 comprises a microcomputer for controlling the outdoor side of the air conditioner, it is to be noted that the microcomputer is not limited thereto but any microcomputer may be used as long as it controls the air conditioner.

The rotation control of the second brushless motor 2 will be described in detail with reference to a flow chart shown in Fig. 3. First, in the microcomputer 20, the number of revolutions of the second brushless motor 2 is calculated on the basis of a position detecting signal inputted through an input port. (Step ST1). This method for calculation of the number of revolutions is carried out by measuring the time between a rise and a fall of three position detecting signals (shown in Figs. 2(d) to 2(f)) inputted, for example.

Next, the calculated number of revolutions is compared with a predetermined number of revolutions of the second brushless motor 2 so that the calculated number of revolutions assumes the predetermined number of revolutions (Step ST2 and Step ST4). When the calculated number of revolutions is smaller than the predetermined number of revolutions (Step ST2), the on-time of the chopping signals of the on-portions of the drive signals of the transistors of the lower arm 22b constituting the second drive circuit 22 is increased (namely, the off time reduces, and the ratio of on to off varies) (Step ST3) in order to make the number of revolutions of the second brushless motor 2 equal to the predetermined number of revolutions, whereby the AC voltage applied to the three-phase winding of the second brushless motor 2 is increased and the number of revolutions of the second brushless motor 2 is increased.

On the other hand, when the calculated number of revolutions is larger than the predetermined number of revolutions (Step ST4), the on-time of the chopping signals of the drive signals of the transistors of the lower arm 22b is reduced (namely, the off time increases, and the ratio of on to off varies) (Step ST5) in order to make the number of revolutions of the second brushless motors 2 equal to the predetermined number of revolutions, whereby the resulting average AC voltage applied to the three-phase winding of the second brushless motor 2 is decreased, and the number of revolutions of the second brushless motor 2 is decreased.

By the repetition of the above-described Steps ST1 to ST5, the number of revolutions of the second brushless motor is variably controlled and the second brushless motor is controlled in rotation to stay constant at a predetermined number of revolutions.

The first brushless motor 1 is also rotation-controlled similarly to that of the second brushless motor 2. Accordingly, the first and second brushless motors are controlled in rotation constant at a predetermined number of revolutions by the microcomputer 20.

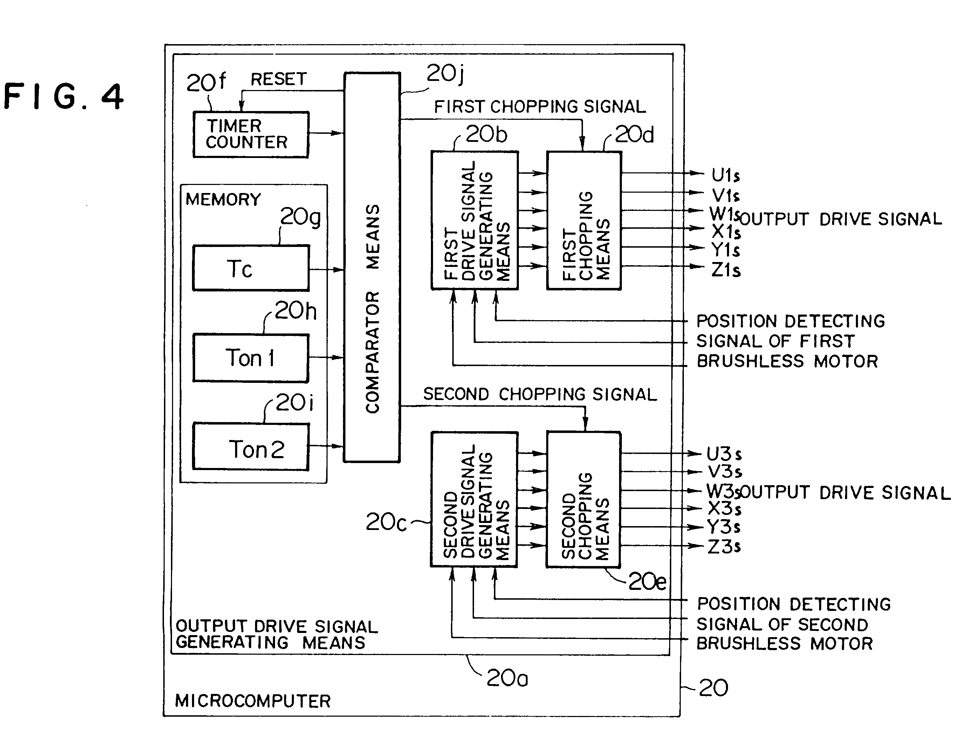

As shown in Fig. 4, the microcomputer 20 has output drive signal generating means 20a which performs the input/output of an input/output circuit necessary for the control of the air conditioner to control the latter and generates drive signals of the transistors of the first and second drive circuits 5 and 22.

The output drive signal generating means 20a is composed of first and second signal generating means 20b, 20c, first and second chopping means 20d, 20e, a timer counter 20f, memories 20g, 20h, 20i, and comparator means 20j.

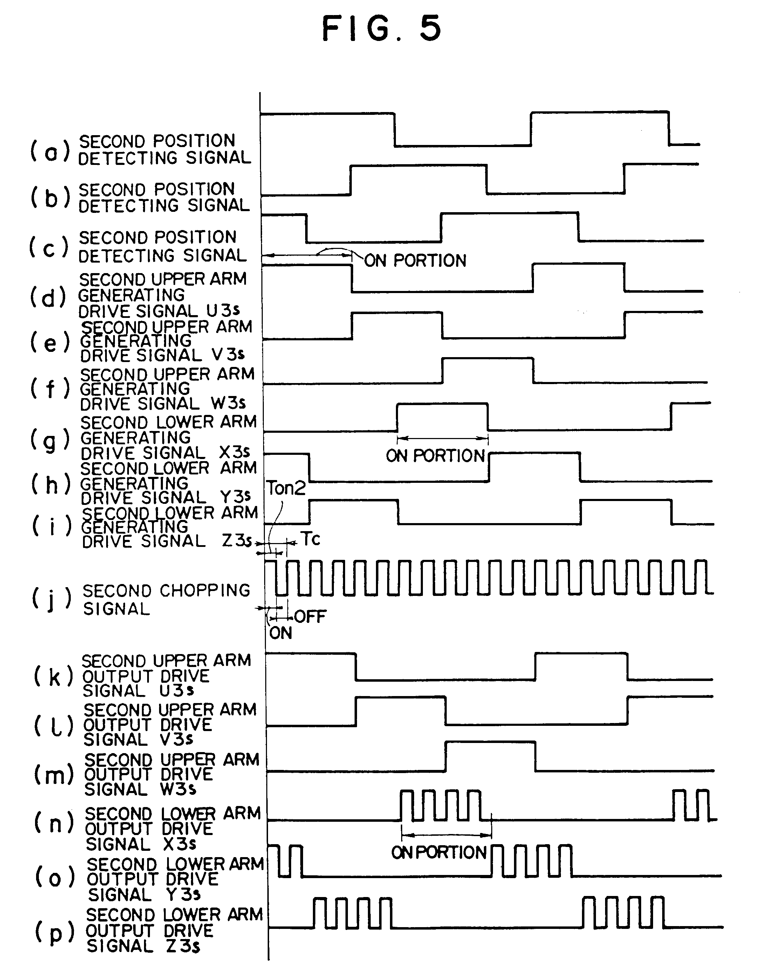

The first and second drive signal generating means 20b and 20c input position detecting signals (position detecting signals of the second brushless motor 2 are shown in Figs. 5(a) to 5(c)) of the first and second brushless motors 1 and 2 to generate drive signals U1s, V1s, W1s, X1s, Y1s and Z1s for turning on as desired the transistors U1t, V1t, W1t, X1t, Y1t and Z1t and U3t, V3t, W3t, X3t, Y3t and Z3t of the first and second drive circuits 5 and 22, respectively, and U3s, V3s, W3s, X3s, Y3s and Z3s shown in Figs. 5(d) to 5(i) so that the first and second brushless motors 1 and 2 are rotated in response to the position detecting signals.

On the other hand, the chopping signal generating means composed of the timer counter 20f, memories 20g, 20h, 20i, and comparator means 20j generates a first chopping signal having a predetermined ratio of on to off at a higher frequency than that of the drive signals generated as described above and a second chopping signal shown in Fig. 5(j). At this time, a period Tc (shown in Fig. 5(j)) of the first and second chopping signals are set by the memory 20g, and predetermined on-times Tonl and Ton2 (shown in Fig. 5(j)) of the first and second chopping signals are set by the memories 20h and 20i. Then, the timer counter 20f is reset to cause it to start, and at the same time, the first and second chopping signals are set to an H level (on).

Thereafter, in the comparator means 20j, the counted value of the timer counter 20f is compared with the values of the on-times Ton1 and Ton2 of the first and second chopping signals of the memories 20h and 20i. When they coincide, the corresponding chopping signal is set to an L level (off). Thereafter, the counted value of the timer counter 20f is compared with the value of the period Tc of the first and second chopping signals of the memory 20g. When they coincide, the timer counter 20f is reset to cause it to start, and the first and second chopping signals are set to an H level (on). After this, the foregoing processes are repeated, and the first and second chopping signals are generated (the generated chopping signal is shown in Fig. 5(j)).

The first and second chopping means 20d and 20e input the drive signals generated by the first and second drive signal generating means 20b and 20c and input the generated first and second chopping signals. The drive signals for turning on as desired the transistors X1t, Y1t, Z1t and X3t, Y3t and Z3t of at least one arm, the lower arms 5b and 22b of the upper and lower arms 5a, 22a and 5b, 22b of the first and second drive circuits 5 and 22, out of the inputted drive signals, and the on-portions of X3s, Y3s and Z3s are subjected to the chopping by the first and second chopping signals (shown in Figs. 5(n) to 5(p)).

This can be accomplished by taking the logical product or the logical sum, the logical product in this example, of the drive signals X1s, Y1s, Z1s and X3s, Y3s, Z3s subjected to the chopping in the first and second chopping means 22d and 22e and the first and second chopping signals. In the case of the second chopping means 20e, the output drive signals X3s, Y3s, Z3s shown in Figs. 5(n) to 5(p) assume an H level only when the generated second drive signals X3s, Y3s, Z3s shown in Figs. 5(g) to 5(i) are at H level and the generated second chopping signal shown in Fig. 5(j) is at an H level. As the result, the on-portions of the drive signals of the lower arms 5b and 22b of the first and second drive circuits 5 and 22 serve as the first and second chopping signals, respectively.

The first and second drive signals X1s, Y1s, Z1s and X3s, Y3s, Z3s (shown in Figs. 5(n) to 5(p)) in which the on-portions are formed into the first and second chopping signals, and the other first and second drive signals U1s, V1s, W1s and U3s, V3s, W3s (shown in Figs. 5(k) to 5(m)) are generated by the first and second chopping means 20d and 20e. These generated twelve first and second drive signals are outputted from the microcomputer 20.

The microcomputer 20 varies as desired the on-times Ton1 and Ton2 of the first and second chopping signals set by the memories 20h and 20i by the method shown in the flow chart of Fig. 3 to rotation-control the first and second brushless motors 1 and 2 constant at a predetermined number of revolutions. In the case of this embodiment, the period of the first and second chopping signals is the same as the period Tc, and one memory 20g is used to decide the period of the first and second chopping signals. It is to be noted that the period Tc set by the memory 20g may be varied as needed.

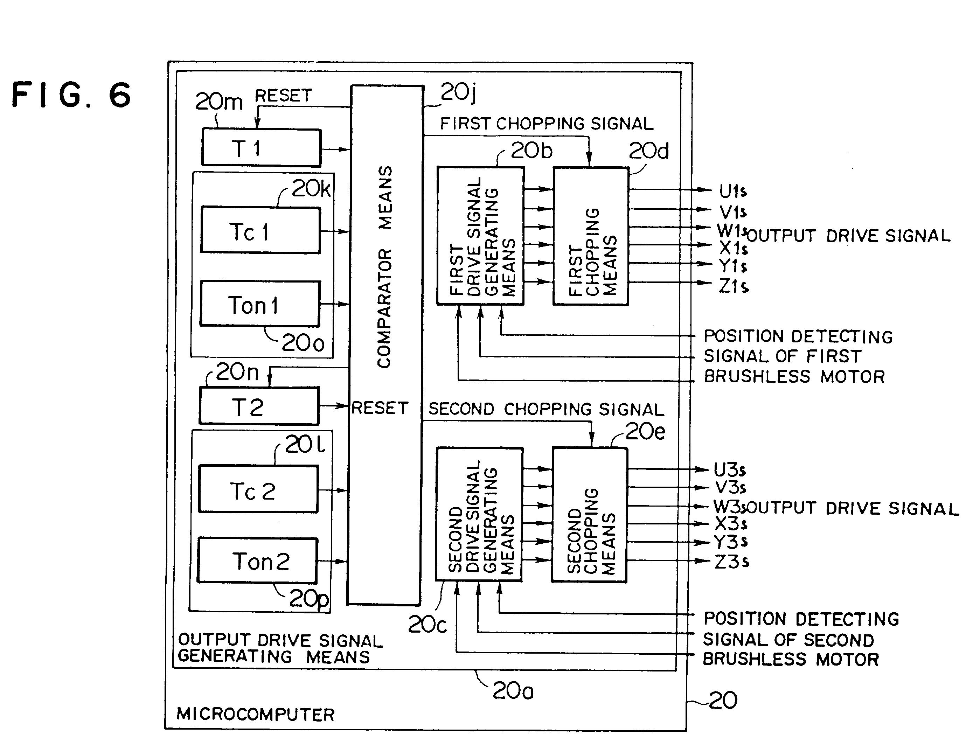

Fig. 6 is a schematic block diagram of output drive signal generating means 20a of the microcomputer 20 showing a modified example of this embodiment. In Fig. 6, the same parts as and parts corresponding to those shown in Fig. 4 are indicated by the same reference numerals, and a duplicate description is omitted.

In this modified example, in generating the first and second chopping signals, the period of the first chopping signal is Tc1 and the period of the second chopping signal is Tc2, these Tc1 and Tc2 being set by individual memories 20k and 201. The periods of the chopping signals can be made to be different values by individual timer counters, i.e., a first timer counter (T1) 20m and a second timer counter (T2) 20n. Since different periods of the first and second chopping signals can be applied by the memories 20o and 20p, optimum chopping signals can be generated for the first and second brushless motors 1 and 2.

While in this embodiment, a first and a second brushless motor 1 and 2 are rotation-controlled by the first and second drive signals generated by the output drive signal generating means 20a of the microcomputer 20 and outputted from the microcomputer 20, it is to be noted that the mode is not limited thereto but more than two brushless motors may be rotation-controlled in a similar manner. In this case, the number of drive signal generating means constituting the output drive signal generating means 20a, chopping means and chopping signal generating means (timer counter, memory and comparator means) may be increased as needed.

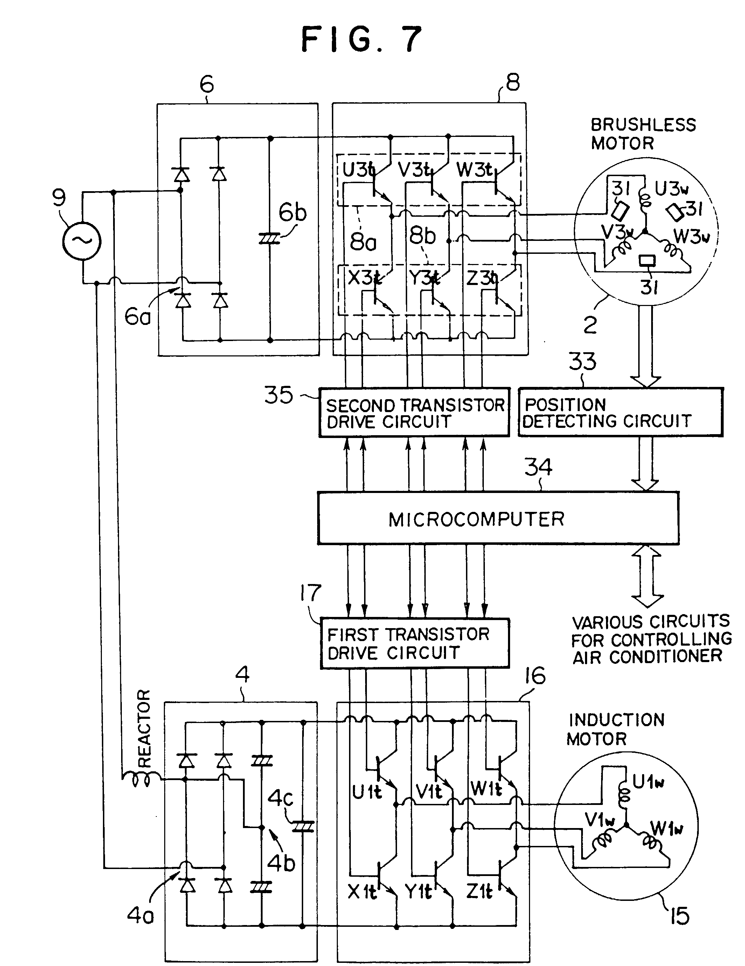

A second embodiment of the present invention will be described hereinafter with reference to Figs. 7 to 10. In these drawings, the same parts as and parts corresponding to those shown in Fig. 14 are indicated by the same reference numerals and a duplicate description will be omitted.

In Fig. 7, the control circuit for the air conditioner comprises, similar as in Fig. 14, the induction motor 15 for the compressor, the brushless motor 2 for the blower (for example, outdoor), the first power circuit 4, the first drive circuit 16, the first transistor drive circuit 17, the second power circuit 6, the second drive circuit 8, a position detecting sensor (for example, a hall element) 31, a position detecting circuit 33, a microcomputer 34 and a second transistor drive circuit 35.

In the case of this example, the first power circuit 4 inputs the AC power 9 through a reactor and outputs a predetermined DC voltage. This DC voltage is inputted to the first drive circuit 16 as the first drive means in which six transistors U1t, X1t, V1t, Y1t, W1t, Y1t and Z1t as a plurality of switches are connected in three-phase bridge, and is converted into a three-phase AC voltage, which is then applied to the three-phase windings U1w, V1w and W1w of the three-phase induction motor 15. The second power circuit 6 is provided with a commutation circuit 6a for converting the input AC power 9 into DC power, and with the smoothing condenser 6b, etc. A predetermined DC voltage outputted from the second power circuit 6 as said DC power is inputted into the second drive circuit 8 as second drive means composed of the six transistors U3t, V3t, W3t, X3t, Y3t and Z3t as a plurality of switches connected in three-phase bridge, and is converted into a three-phase AC voltage, which is then applied to the three-phase windings U3w, V3w and W3w of the three-phase brushless motor 2 for driving the blower. The second drive circuit 8 is composed of an upper arm 8a comprising the three transistors U3t, V3t and W3t as a plurality of switches for switching the connection between the positive terminal of the second power circuit as the DC power and the three-phase windings U3w, V3w and W3w as a plurality of windings of the brushless motor 2, and a lower arm 8b comprising the three transistors X3t, U3t and Z3t as a plurality of switches for switching the connection between the negative terminal of the second power circuit 6 as the DC power and the three-phase windings U3w, V3w and W3w as a plurality of windings of the brushless motor 2.

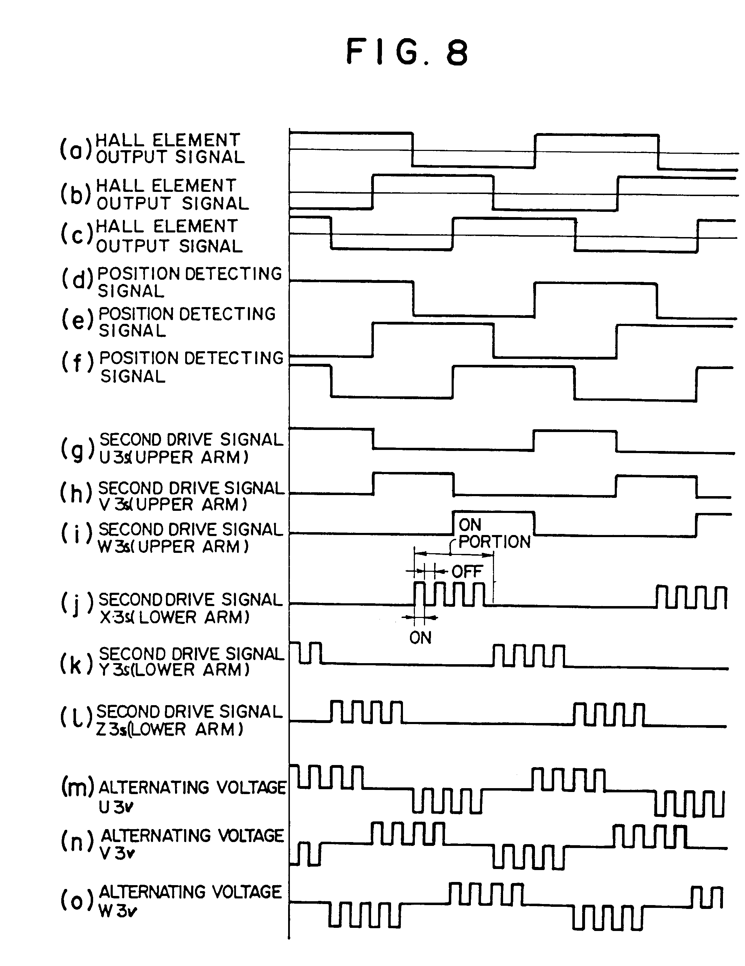

The position detecting means of the brushless motor 2 comprises the position sensors (hall elements) 31 within the brushless motor 2 for detecting the position of the rotor of the brushless motor 2 for the blower, and a position detecting circuit 33 constituted by comparator means and amplifying means inputting output signals (shown in Figs. 8(a) to 8(c)) of the position detecting sensors 31 and outputting position detecting signals (shown in Figs. 8(d) to 8(f)).

The microcomputer 34 performs the input/output with respect to various circuits necessary for at least the outdoor, for example, of the air conditioner to control the outdoor, and outputs PMW signals U1s, X1s, V1s, Y1s, W1s and Z1s as first drive signals to the first transistor circuit 17 on the basis of the intersection between the modulated waves and fundamental waves U1f, V1f and W1f having a predetermined crest value and a predetermined frequency in a manner similar to that of the prior art. The first transistor drive circuit 17 turns on/off the transistors U1t, X1t, V1t, Y1t, W1t and Z1t of the first drive circuit 16 on the basis of the inputted first drive signal, and converts the DC voltage from the first power circuit 4 inputted into the first drive circuit 16 into three-phase AC voltages U1v, V1v and W1v having a predetermined voltage value and a predetermined frequency, which are applied to the three-phase windings U1w, V1w and W1w of the induction motor 15 to rotation-control the induction motor 15 to a predetermined number of revolutions. Simultaneously therewith, the microcomputer 34 inputs the position detecting signals to turn on as desired the transistors U3t, V3t, W3t, X3t, Y3t and Z3t of the second drive circuit 8 so that the brushless motor 2 is rotated in response to the position detecting signals to switch the connection between the positive terminal and negative terminal of the second power circuit 6 and the three-phase windings U3w, V3w and W3w of the brushless motor 2.

The second drive signals for conversion of the DC voltage generated by the second power circuit 6 into the AC voltage and application thereof are generated in the three-phase windings U3w, V3w and W3w. The on-portions of the drive signals X3s, Y3s and Z3s (shown in Figs. 8(j) to 8(1)) for turning on as desired the transistors X3t, Y3t and Z3t of at least one arm, for example, the lower arm 8b of the upper and lower arms 8a and 8b of the second drive circuit a, out of the second drive signals are formed into chopping signals having a predetermined ratio of on to off for turning on/off as desired the transistors X3t, Y3t and Z3t at a higher frequency than that of the drive signals; and the drive signals X3s, Y3s and Z3s of the lower arm 8b as the drive signals in which the on-portions are formed into the chopping signals, and the drive signals U3s, V3s and W3s (shown in Figs. 8(g) to 8(i)) of the upper arm 8a as the other drive signals are outputted as the second drive signals for driving the transistors U3t, V3t, W3t, X3t, Y3t and Z3t of the second drive circuit 8 by the second transistor drive circuit 35.

The second transistor drive circuit 35 turns on as desired the transistors U3t, V3t, W3t, X3t, Y3t and Z3t of the second drive circuit 8 in accordance with the second drive signals inputted, and simultaneously therewith, chopping-drives in accordance with the chopping signals the transistors X3t, Y3t and Z3t of the lower arm 8b which is at least one arm of the upper and lower arms 8a, 8b of the second drive circuit 8 so that when a DC voltage from the second power circuit 6 is converted into a three-phase AC voltage, the three-phase AC voltage subjected to chopping and conversion is formed into a predetermined resulting average voltage. Three-phase AC voltages U3v, V3v and W3v (shown in Figs. 8(m) to 8(o)) of said predetermined voltage are applied to the three-phase windings U3w, V3w and W3w of the brushless motor 2 to rotation-control the brushless motor 2.

The number of revolutions of the brushless motor 2 can be calculated in the steps similar to those shown in Fig. 3 of the first embodiment. Although the detailed description is omitted, the brushless motor 2 can be controlled in rotation constant at a predetermined number of revolutions by the repetition of the steps ST1 and ST5.

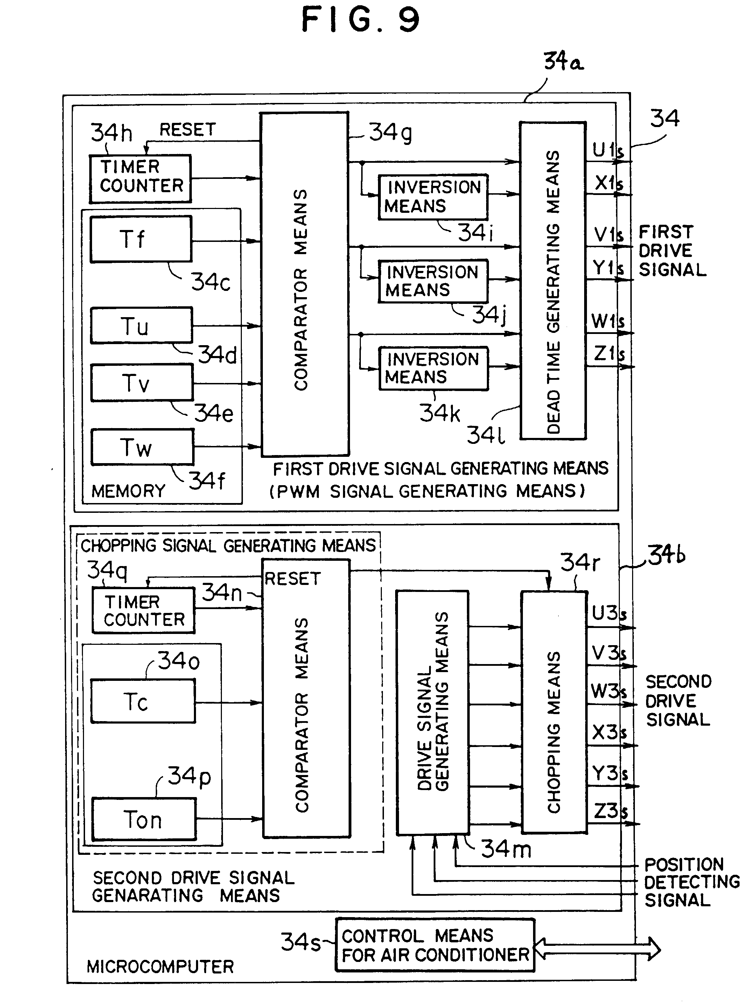

For example, as shown in Fig. 9 as one example, the microcomputer 34 is interiorly provided with control means 34s of the air conditioner for performing the input/output with respect to various circuits necessary for the control of the air conditioner to control the latter, first drive signal generating means 34a for generating the first drive signal for rotation-controlling the induction motor 15, and second drive signal generating means 34b for generating the second drive signal for rotation-controlling the brushless motor 2.

The first drive signal generating means 34a has a timer, which in this case comprises PWM signal generating means (see Figs. 15(b) to 15(g)) for generating, as first drive signals U3s, X3s, V3s, Y3s, W3s and Z3s, six PWM signals for turning on/off as desired the six transistors U1t, X1t, V1t, Y1t, W1t and Z1t of the first drive circuit 5 for rotation-controlling the three-phase induction motor 15. The microcomputer 34 obtains the intersections between the modulated waves and the fundamental waves U1f, V1f and W1f at a half-period Tf (see Fig. 15(a)) to set Tu1, Tv1 and Tw1 up to the respective intersections to 14d, 14e and 14f. Then, the microcomputer 34 sets the half-period Tf of the modulated wave by the memory 34c and sets the obtained values Tu1, Tv1 and Tw1 by the memories 34d, 34e and 34f.

The timer counter 34h is reset to cause it to start, and simultaneously therewith, the three signals U1s, V1s and W1s outputted from the comparator means 34g take an L level. In the comparator means 34g the counted value of the timer counter 34h is compared with the values Tu1, Tv1 and Tw1 of the memories 34d, 34e and 34f. When they coincide, the respective output signals are inverted. When the counted value of the timer counter coincides with the value of the memory 34c at the half-period Tf of the modulated wave, the comparator means 34g resets the timer counter 34h, during which within the microcomputer 34, the intersections between the modulated waves at the next half-period of the modulated wave and the fundamental waves U1f, V1f and W1f occur. From that intersections, Tu1, Tv1 and Tw1 are newly obtained. The microcomputer 34 again writes the newly obtained values Tu1, Tv1 and Tw1 into the memories 34d, 34e and 34f simultaneously with the reset of the timer counter 34h to re-start the timer counter 34h. The above-described processes are thereafter repeated in the similar manner, and the PWM signals of U1s, V1s and W1s shown in Figs. 15(b), 15(d) and 15(f) are outputted from the comparator means 34g.

The three PWM signals U1s, V1s and W1s are respectively inverted by inversion means 34i, 34j and 34k and formed into PWM signals X1s, Y1s and Z1s shown in Figs. 15(c), 15(e) and 15(g). These inverted PWM signals X1s, Y1s and Z1s and noninverted signals U1s, V1s and W1s are inputted into dead time generating means 341. The dead time generating means 341 is a delay means, which in order to prevent two same-phase transistors (U1t and X1t, V1t and Y1t, and W1t and Z1t) of the first drive circuit 16 from being simultaneously turned on to short-circuit the power, outputs for example PWM signals U1s, X1s, V1s, Y1s, W1s and Z1s inputted with a rise thereof delayed a predetermined time to prevent the two same-phase transistors from simultaneously taking an H level (on). In this manner, the six PWM signals U1s, X1s, V1s, Y1s, W1s and Z1s as the first drive signals are generated from the first drive signal generating means 34a and outputted from the microcomputer 34.

At the same time, the microcomputer 34 varies, in order to impart a predetermined number of revolutions to the induction motor 15, the fundamental waves U1f, V1f and W1f to a predetermined crest value and a predetermined frequency in accordance with said predetermined number of revolutions to thereby render the intersection between the modulated wave and the fundamental wave variable, whereby the values Tu1, Tv1 and Tw1 set by the memories 34d, 34e and 34f are made variable, and the pulse widths (on/off timing) of the six PWM signals are made variable and outputted to vary the number of revolutions of the induction motor 15 to rotation-control the latter at a predetermined number of revolutions. It is to be noted that the half-period Tf of the modulated wave set by the memory 34c may be made variable as needed.

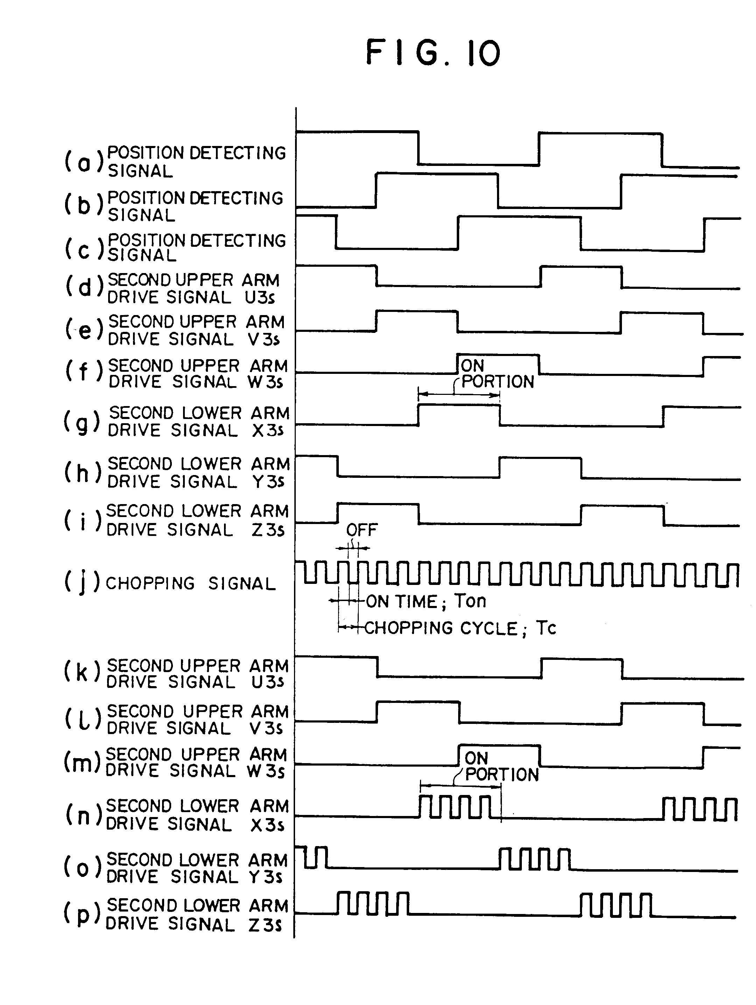

On the other hand, the second drive signal generating means 34b inputs position detecting signals (shown in Figs. 10(a) to 10(c)) from the position detecting circuit 33 into the drive signal generating means 34m and generates the second drive signals U3s, V3s, W3s, X3s, Y3s and Z3s shown in Figs. 10(d) to 10(i) for turning on as desired transistors U3t, V3t, W3t, X3t, Y3t and Z3t of the second drive circuit 8 so that the brushless motor 2 is rotated in response to said position detecting signals. The chopping signal generating means composed of the timer counter 34q, memories 34o and 34p and comparator means 34n generates a chopping signal shown in Fig. 10(j) having a predetermined ratio of on to off at a higher frequency than that of the generated second drive signal. By the microcomputer 34, the period Tc of the chopping signal and on-time Ton are set by the memories 34o and 34p, and a timer counter 34q is reset to cause it to start, simultaneously therewith the output chopping signal being allowed to assume an H level (on). Thereafter, by the comparator means 34n, the counted value of the timer counter 34q is compared with the on-time Ton of the chopping signal of the memory 34p. When they coincide, the output chopping signal is allowed to assume an L level (on). Thereafter, the counted value of the timer counter 34q is compared with the period Tc of the chopping signal of the memory 34o by the comparator means 34n. When they coincide, the timer counter 34q is reset to cause it to re-start, simultaneously therewith the output chopping signal being allowed to assume an H level (on). The above-described processes are thereafter repeated in the similar manner, and the chopping signal shown in Fig. 10(j) is generated from the chopping signal generating means.

The chopping means 34r inputs the generated second drive signal and the chopping signal, and subjects the on-portions of the drive signals X3s, Y3s and Z3s for turning on as desired the transistors X3t, Y3t and Z3t of one arm, for example, the lower arm 8b of the second drive circuit S out of the second signals to chopping by said chopping signal as shown in Figs. 10(n) to 10(p). This can be carried out by taking the logical product or logical sum, for example, logical product of the drive signals X3s, Y3s and Z3s subjected to chopping and the chopping signal. The drive signals X3s, Y3s and Z3s to be outputted shown in Figs. 10(n) to 10(p) are at the H level only when both the generated drive signals X3s, Y3s and Z3s shown in Figs. 10(g) to 10(i) are at the H level and the chopping signal shown in Fig. 10(j) is at the H level. As the result, the on-portions of the drive signals X3s, Y3s and Z3s are chopping signals.

The drive signals X3s, Y3s and Z3s (shown in Figs. 10(n) to 10(p)) in which the on-portions are chopping signals, and the other drive signals U3s, V3s and W3s (shown in Figs. 10(k) to 10(m)) are outputted as second drive signals from the microcomputer 34. At this time, the microcomputer 34 varies as desired the on-time Ton of the chopping signal set by the memory 34p, varies the ratio of on to off of the chopping of the on-portions of the second drive signals X3s, Y3s and Z3s and varies the number of revolutions of the brushless motor 2 to rotation-control the brushless motor 2 at a predetermined number of revolutions. It is to be noted that the period Tc of the chopping signal set by the memory 34p may be varied as needed.

Further, while in the above one example of the microcomputer 34, the first drive signals for rotation-controlling the induction motor 15 and the second drive signals for rotation-controlling the brushless motor 2 are respectively outputted by a set, it is to be noted that the mode is not limited thereto but more than one set can be applied, and plural sets of first drive signals or plural sets of second drive signals for rotation-controlling a plurality of induction motors 15 or a plurality of brushless motors 2, respectively, may be outputted.

In this case, the number of the timer counters 34h and memories 34c, 34d, 34e and 34f constituting the first drive signal generating means 34a, the comparator means 34g, the inversion means 34i, 34j, 34k and the dead time generating means 341 ; and also the number of the drive signal generating means 34m constituting the second drive signal generating means 34b, the timer counter 34q of the chopping signal generating means, the memories 34o and 34p, the comparator means 34n and the chopping means 34r may be increased as needed.

## Claims

1. A control device for an air conditioner comprising:
at least two motors (1, 2), one for driving a compressor and one for driving a blower of an air conditioner, one of the motors being a brushless motor (1);
position detecting means (10), with respect to said brushless motor (1), detecting the position of the rotor of said brushless motor to output a position detecting signal;
drive means (5) for said brushless motor (1) composed of a first set comprising a plurality of semiconductor switches (U1t, V1t, W1t) for switching the connection between a positive terminal of a DC power source (4) and a plurality of windings (U1w, V1w, W1w) of said brushless motor (1), and a second set comprising a plurality of semiconductor switches (X1t, Y1t, Z1t) for switching the connection between said plurality of windings and a negative terminal of the DC power source;
drive signal generating means (20a) wherein with respect to said respective brushless motor (1), a position detecting signal (from 10) of said brushless motor is inputted to said microcomputer (20), the switches (U1t, V1t, W1t, X1t, Y1t, Z1t) of the drive means (5) of said brushless motor are turned on and off so that the connection between the positive terminal und the negative terminal of said DC power source (4) and the windings of said brushless motor is switched, and the DC voltage from said DC power source is converted into an AC voltage, which is applied to said plurality of windings to rotate said brushless motor in response to said position detecting signal;
a microcomputer (20) for controlling said motors including chopping signal generating means (20f-20j) having a predetermined ratio of on to off for turning on/off the drive signals, the on-portions of the drive signals turning on the semiconductor switches constituting at least one of the first or second sets of said drive means
chopping of said drive signals by said semiconductor switches taking place at a higher frequency than that of the drive signals;
rotation-control taking place by the chopped drive signals and other drive signals, if any, being outputted from said microcomputer (20), the semiconductor switches (U1t, V1t, W1t, X1t, Y1t, Z1t) of the first set and second set of said drive means (5) being turned on as controlled, the semiconductor switches of at least one of the sets being turned on/off by the chopping signals at the time of said on, and the AC voltage derived from the DC voltage from said DC power being at the same time of being converted into the AC voltage subjected to chopping and being then applied to the windings (U1w, V1w, W1w) of said brushless motor to rotation-control said brushless motor,
characterized in that also the other motor (2) is a brushless motor rotation-controlled by said microprocessor (20) and means (22, 25) equal to the ones of the first motor and similarly in signal-exchange as the first motor (1).

2. A control device for an air conditioner comprising:
at least two motors (2, 15), one for driving a compressor and one for driving a blower of an air conditioner, one of the motors being a brushless motor (2) ;
position detecting means (31, 33), with respect to said brushless motor (2), detecting the position of the rotor of said brushless motor to output a position detecting signal;
drive means (8) for said brushless motor (2) composed of a first set comprising a plurality of semiconductor switches (U3t, V3t, W3t) for switching the connection between a positive terminal of a DC power source (6) and a plurality of windings (U3w, V3w, W3w) of said brushless motor (2), and a second set comprising a plurality of semiconductor switches (X3t, Y3t, Z3t) for switching the connection between said plurality of windings and a negative terminal of the DC power source;
drive signal generating means (34b) wherein with respect to said respective brushless motor (2), a position detecting signal (from 31, 33) of said brushless motor is inputted to said microcomputer (34), the switches (U3t, V3t, W3t, X3t, Y3t, Z3t) of the drive means (8) of said brushless motor are turned on and off so that the connection between the positive terminal und the negative terminal of said DC power source (6) and the plurality of windings of said brushless motor is switched and the DC voltage from said DC power source is converted into an AC voltage, which is applied to said plurality of windings to rotate said brushless motor in response to said position detecting signal;
a microcomputer (34) for controlling said motors including chopping signal generating means (34n-q) having a predetermined ratio of on to off for turning on/off the drive signals, the on-portions of the drive signals turning on the semiconductor switches constituting at least one of the first or second sets of said drive means, chopping of said drive signals by said semiconductor switches taking place at a higher frequency than that of the drive signals;
rotation-control taking place by the chopped drive signals and other drive signals, if any, being outputted from said microcomputer (34), the semiconductor switches (U3t, V3t, W3t, Y3t, X3t, Z3t) of the first set and second set of said drive means (8) being turned on as controlled, the semiconductor switches of at least one of the sets being turned on/off by the chopping signals at the time of said on, and the AC voltage derived from the DC voltage from said DC power being at the same time of being converted into the AC voltage subjected to chopping and being then applied to the windings (U3w, V3w, W3w) of said brushless motor to rotation-control said brushless motor,
characterized in that the other motor (15) is an induction motor (15) supplied by a control device (16, 17) having a plurality of semiconductor switches (U1t, V1t, W1t, X1t, Y1t, Z1t) and comprising drive means (16) supplying said induction motor, driven by converting a DC voltage (from 4) into an AC voltage by turning on and off said semiconductor switches which are turned on and off as controlled by said microcomputer (34) to output a drive signal resulting from converting said DC voltage into the AC voltage having a predetermined voltage and a predetermined frequency for rotation control.

3. The control device for an air conditioner according to claim 2, characterized in that said microcomputer (34) comprises, as means for rotation-controlling said induction motor (15) and said brushless motor (2), first drive signal generating means (34a) for generating said first drive signal for controlling the drive means (16) for the power supply of said induction motor, and second drive signal generating means (34b) for generating said second drive signal (Figs. 10k-p) for controlling the drive means (8) for the supply of said brushless motor;
said first drive signal generating means (34a) comprises PWM signal generating means (34g,i-l) of said induction motor for generating a plurality of PWM signals as the first drive signals for turning on/off the semiconductor switches (U1t, V1t, W1t, X1t, Y1t, Z1t) of said first drive means (16) for rotation-controlling said induction motor (15) and generating said on/off timing of said PWM signals by a timer (34h); and
said second drive signal generating means (34b) comprises drive signal generating means (34m) for generating the second drive signals for turning on said plurality of switch means (U3t, V3t, W3t, X3t, Y3t, Z3t) of the first set and the second set of said second drive means (8) of said brushless motor (2) in response to said position detecting signal (Figs.10a-c) for rotation-controlling said brushless motor (2), the chopping signal generating means (34n-q) for generating the chopping signal (Fig. 10j) having a predetermined ratio of on to off at a higher frequency than that of said generated second drive signal and generating the on/off timing of said chopping signal by a timer (34q), and chopping means (34r) for chopping the drive signals for turning on as desired the switch means of at least one of the first and second sets of the driving means (8) of said brushless motor (2) by said generated chopping signal.

4. The control device for an air conditioner according to any of claims 1 to 3, characterized in that said microcomputer (20, 34) is adapted to calculate the number of revolutions of said brushless motor (1, 2) on the basis of said position detecting signals (Figs. 5a-c, Figs. 8a-c) inputted, and to vary the ratio of on to off of said chopping signal (Fig. 5j) so that said calculated number of revolutions is a predetermined number of revolutions.

5. The control device for an air conditioner according to any of claims 1 to 4, characterized in that said microcomputer (20, 34) comprises:
the drive signal generating means (20a, 34b) generating said drive signal (Figs. 5n-p, Figs. 8j-o) for turning on as desired said plurality of semiconductor switches (U1t, V1t, W1t, X1t, Y1t, Z1t; U3t, V3t, W3t, Y3t, X3t, Z3t) so that said brushless motor (1, 2) is rotated in response to said position detecting signals (Figs. 5a-c, Figs. 8a-c) ;
the chopping signal generating means (20f-i; 20j, k, 1, m, o, p; 34n-q) generating the chopping signals having a predetermined ratio of on to off at a higher frequency than that of the generated drive signals; and
chopping means (20d, 20e, 34r) chopping the on-portions of the drive signals for turning on as desired said plurality of semiconductor switches of at least one of the sets by said generated chopping signals.

6. The control device for an air conditioner according to claim 5, characterized in that said chopping means (20d, 20e, 34r) takes a logical sum and/or a logical product of the generated drive signal and the generated chopping signal to subject the on-portions of the generated drive signal to chopping.

## Patentansprüche

1. Steuervorrichtung für eine Klimaanlage, mit:
zumindest zwei Motoren (1, 2), einen zum Antreiben eines Kompressors und einen zum Antreiben eines Lüfters der Klimaanlage, wobei einer der Motoren ein bürstenloser Motor (1) ist;
einer positionsdetektierenden Einrichtung (10) bezüglich des bürstenlosen Motors (1), die die Position des Rotors des bürstenlosen Motors ermittelt, um ein Positionsdetektionssignal auszugeben;
einer Treibereinrichtung (5) für den bürstenlosen Motor (1), bestehend aus einem ersten Satz von Halbleiterschaltern (U1t, V1t, W1t) zum Schalten der Verbindung zwischen einem positiven Anschluß einer Gleichstromquelle (4) und einer Mehrzahl von Wicklungen (U1w, V1w, W1w) des bürstenlosen Motors (1) und einem zweiten Satz von Halbleiterschaltern (X1t, Y1t, Z1t) zum Schalten der Verbindung zwischen der Mehrzahl von Wicklungen und einem negativen Anschluß der Gleichstromquelle;
einer treibersignalerzeugenden Einrichtung (20a), worin bezüglich des betreffenden bürstenlosen Motors (1) ein Positionsdetektionssignal (von 10) des bürstenlosen Motors in den Mikrocomputer (20) eingegeben wird, wobei die Schalter (U1t, V1t, W1t, X1t, Y1t, Z1t) der Treibereinrichtung (5) des bürstenlosen Motors so ein- und ausgeschaltet werden, daß die Verbindung zwischen dem positiven und dem negativen Anschluß der Gleichstromquelle (4) und den Wicklungen des bürstenlosen Motors geschaltet wird, und die Gleichspannung von der Gleichstromquelle in eine Wechselspannung konvertiert wird, die auf die Mehrzahl der Wicklungen gegeben wird, um den bürstenlosen Motor als Antwort auf das Positionsdetektionssignal in Drehung zu versetzen;
einen Mikrocomputer (20) zum Steuern des Motors, der eine zerhackersignalerzeugende Einrichtung (20f-20j) mit einem vorbestimmten Tastverhältnis zum Ein/Ausschalten der Treibersignale aufweist, wobei die Einschaltabschnitte der Treibersignale die Halbleiterschalter durchschalten, welche zumindestens einen der ersten oder zweiten Sätze der Treibereinrichtung bilden, wobei ein Zerhacken der Treibersignale durch die Halbleiterschalter mit einer höheren Frequenz stattfindet als derjenigen der Treibersignale;
wobei die Steuerung der Drehung durch die zerhackten Treibersignale und andere Treibersignale, falls vorhanden, stattfindet, die von dem Mikrocomputer (20) ausgegeben werden, die Halbleiterschalter (U1t, V1t, W1t, X1t, Y1t, Z1t) des ersten Satzes und des zweiten Satzes der Treibereinrichtung (5) gesteuert durchgeschaltet werden, die Halbleiterschalter von zumindestens einem der Sätze durch die Zerhackersignale zur Zeit ihrer Einschaltung auf Durchlaß und Sperrung geschaltet werden und die Wechselspannung, die aus der Gleichspannung der Gleichstromversorgung abgeleitet ist, zur selben Zeit, da sie in die Wechselspannung konvertiert wird, einem Zerhacken unterworfen wird und dann auf die Wicklungen (U1w, V1w, W1w) des bürstenlosen Motors gegeben wird, um den bürstenlosen Motor bezüglich der Drehung zu steuern,
dadurch gekennzeichnet, daß auch der weitere Motor (2) ein bürstenloser Motor ist, der bezüglich der Drehung von dem Mikroprozessor (20) und von einer Einrichtung (22, 25) gleich denjenigen des ersten Motors und in gleicher Weise bezüglich des Signalaustauschs wie der erste Motor (1) gesteuert ist.

2. Steuervorrichtung für eine Klimaanlage, mit:
zumindest zwei Motoren (2, 15), einen zum Antreiben eines Kompressors und einen zum Antreiben eines Lüfters der Klimaanlage, wobei einer der Motoren ein bürstenloser Motor (2) ist;
einer positionsdetektierenden Einrichtung (31, 33) bezüglich des bürstenlosen Motors (2), die die Position des Rotors des bürstenlosen Motors ermittelt, um ein Positionsdetektionssignal auszugeben;
einer Treibereinrichtung (8) für den bürstenlosen Motor (2), bestehend aus einem ersten Satz von Halbleiterschaltern (U3t, V3t, W3t) zum Schalten der Verbindung zwischen einem positiven Anschluß einer Gleichstromquelle (6) und einer Mehrzahl von Wicklungen (U3w, V3w, W3w) des bürstenlosen Motors (2) und einem zweiten Satz von Halbleiterschaltem (X3t, Y3t, Z3t) zum Schalten der Verbindung zwischen der Mehrzahl von Wicklungen und einem negativen Anschluß der Gleichstromquelle;
einer treibersignalerzeugenden Einrichtung (34b), worin bezüglich des betreffenden bürstenlosen Motors (2) ein Positionsdetektionssignal (von 31, 33) des bürstenlosen Motors in den Mikrocomputer (34) eingegeben wird, wobei die Schalter (U3t, V3t, W3t, X3t, Y3t, Z3t) der Treibereinrichtung (8) des bürstenlosen Motors so ein- und ausgeschaltet werden, daß die Verbindung zwischen dem positiven und dem negativen Anschluß der Gleichstromquelle (6) und den Wicklungen des bürstenlosen Motors geschaltet wird, und die Gleichspannung von der Gleichstromquelle in eine Wechselspannung konvertiert wird, die auf die Mehrzahl der Wicklungen gegeben wird, um den bürstenlosen Motor als Antwort auf das Positionsdetektionssignal in Drehung zu versetzen;
einen Mikrocomputer (34) zum Steuern des Motors, der eine zerhackersignalerzeugende Einrichtung (34n-q) mit einem vorbestimmten Tastverhältnis zum Ein/Ausschalten der Treibersignale aufweist, wobei die Einschaltabschnitte der Treibersignale die Halbleiterschalter durchschalten, welche zumindestens einen der ersten oder zweiten Sätze der Treibereinrichtung bilden, wobei ein Zerhacken der Treibersignale durch die Halbleiterschalter mit einer höheren Frequenz stattfindet als derjenigen der Treibersignale;
wobei die Steuerung der Drehung durch die zerhackten Treibersignale und andere Treibersignale, falls vorhanden, stattfindet, die von dem Mikrocomputer (34) ausgegeben werden, die Halbleiterschalter (U3t, V3t, W3t, X3t, Y3t, Z3t) des ersten Satzes und des zweiten Satzes der Treibereinrichtung (8) gesteuert durchgeschaltet werden, die Halbleiterschalter von zumindestens einem der Sätze durch die Zerhackersignale zur Zeit ihrer Einschaltung auf Durchlaß und Sperrung geschaltet werden und die Wechselspannung, die aus der Gleichspannung der Gleichstromversorgung abgeleitet ist, zur selben Zeit, da sie in die Wechselspannung konvertiert wird, einem Zerhacken unterworfen wird und dann auf die Wicklungen (U3w, V3w, W3w) des bürstenlosen Motors gegeben wird, um den bürstenlosen Motor bezüglich der Drehung zu steuern,
dadurch gekennzeichnet, daß der andere Motor (15) ein Asynchronmotor (15) ist, der von einer Steuervorrichtung (16, 17) versorgt wird, die eine Vielzahl von Halbleiterschaltern (U1t, V1t, W1t, X1t, Y1t, Z1t) hat und eine Treibereinrichtung (16) aufweist, die den Asynchronmotor speist, der durch das Konvertieren einer Gleichspannung (aus 4) in eine Wechselspannung durch Einund Ausschalten der Halbleiterschalter angetrieben wird, die von dem Mikrocomputer (34) gesteuert ein- und ausgeschaltet werden, um ein Treibersignal auszugeben, das das Resultat des Konvertierens der Gleichspannung in die Wechselspannung mit einer vorbestimmten Spannung und einer vorbestimmten Frequenz zur Steuerung der Drehung ist.

3. Steuervorrichtung für eine Klimaanlage nach Anspruch 2, dadurch gekennzeichnet, daß der Mikrocomputer (34) als Mittel zum Steuern der Drehung des Asynchronmotors (15) und des bürstenlosen Motors (2) aufweist: eine erste treibersignalerzeugende Einrichtung (34a) zum Erzeugen des ersten Treibersignals zum Steuern der Treibereinrichtung (16) für die Stromversorgung des Asynchronmotors und eine zweite treibersignalerzeugende Einrichtung (34b) zum Erzeugen des zweiten Treibersignals (Fig.n 10k-p) zum Steuern des Treibereinrichtung (8) für die Versorgung des bürstenlosen Motors;
wobei die erste treibersignalerzeugende Einrichtung (34a) eine Einrichtung zur Erzeugung eines Signals mit Impulsbreitenmodulation (PWM) (34g,i-l) des Asynchronmotors zum Erzeugen einer Vielzahl von PWM-Signalen als erste Treibersignale zum Ein-/Ausschalten der Halbleiterschalter (U1t, V1t, W1t, X1t, Y1t, Z1t) der ersten Treibereinrichtung (16) zum Steuern der Drehung des Asynchronmotors (15) und zum Erzeugen der Ein-/Ausschalttakte der PWM-Signale von einem Taktgeber (34h) umfaßt; und
die zweite treibersignalerzeugende Einrichtung (34b) aufweist: eine treibersignalerzeugende Einrichtung (34m) zum Erzeugen der zweiten Treibersignale zum Einschalten der Vielzahl der Schalteinrichtungen (U3t, V3t, W3t, X3t, Y3t, Z3t) des ersten Satzes und des zweiten Satzes des zweiten Treibereinrichtung (8) des bürstenlosen Motors (2) als Antwort auf das Positionsdetektionssignal (Fig.n 10a-c) zum Steuern der Drehung des bürstenlosen Motors (2), wobei die zerhackersignalerzeugende Einrichtung (34n-q) zum Erzeugen des Zerhackersignals (Fig. 10j) ein vorbestimmtes Tastverhältnis bei einer höheren Frequenz hat als derjenigen des erzeugten zweiten Treibersignals und das Einschalt-Ausschalttakten des Zerhackersignals von einem Taktgeber (34q) erzeugt; und eine Zerhackereinrichtung (34r) zum Zerhacken der Treibersignale zum wunschgemäßen Einschalten der Schalteinrichtungen von zumindestens entweder dem ersten oder dem zweiten Satz der Treibereinrichtung (8) des bürstenlosen Motors (2) durch das erzeugte Zerhackersignal.

4. Steuervorrichtung für eine Klimaanlage nach einem der Ansprüche 1 bis 3, dadurch gekennzeichnet, daß der Mikrocomputer (20, 34) dazu ausgelegt ist, die Drehzahl des bürstenlosen Motors (1, 2) auf Basis der eingegebenen Positionsdetektionssignale (Fig.n 5a-c, Fig.n 8a-c) zu berechnen und das Tastverhältnis des Zerhackersignals (Fig. 5j) so zu variieren, daß die berechnete Drehzahl eine vorbestimmte Drehzahl ist.

5. Steuervorrichtung für eine Klimaanlage nach einem der Ansprüche 1 bis 4, dadurch gekennzeichnet, daß der Mikrocomputer (20, 34) aufweist:
die treibersignalerzeugende Einrichtung (20a, 34b) zum Erzeugen des Treibersignals (Fig.n 5n-p, Fig.n 8j-o) zum wunschgemäßen Einschalten der Vielzahl von Halbleiterschaltern (U1t, V1t, W1t, X1t, Y1t, Z1t; U3t, V3t, W3t, Y3t, X3t, Z3t) so, daß der bürstenlose Motor (1, 2) als Antwort auf die Positionsdetektionssignale (Fig.n 5a-c, Fig.n 8a-c) in Drehung versetzt wird;
die zerhackersignalerzeugende Einrichtung (20f-i; 20j, k, I, m, o, p; 34n-q) zum Erzeugen der Zerhackersignale mit einem vorbestimmten Tastverhältnis bei einer höheren Frequenz als derjenigen der erzeugten Treibersignale; und eine Zerhackereinrichtung (20d, 20e, 34r) zum Zerhacken der Einschalt-Abschnitte der Treibersignale zum wunschgemäßen Einschalten der Vielzahl der Halbleiterschalter von zumindest einem der Sätze durch die erzeugten Zerhackersignale.

6. Steuervorrichtung für eine Klimaanlage nach Anspruch 5, dadurch gekennzeichnet, daß, um die Einschalt-Abschnitte des erzeugten Treibersignals einem Zerhacken zu unterziehen, die Zerhackereinrichtung (20d, 20e, 34r) eine logische Summe und/oder ein logisches Produkt aus dem erzeugten Treibersignal und dem erzeugten Zerhackersignal bildet.

## Revendications

1. Dispositif de commande pour climatiseur,
comprenant:
- au moins deux moteurs (1, 2), l'un pour entraîner un compresseur et l'autre pour entraîner une soufflerie du climatiseur, l'un des moteurs étant un moteur sans balais (1);
- des moyens de détection de position (10), relatifs au moteur sans balais (1), pour détecter la position du rotor du moteur sans balais de manière à fournir en sortie un signal de détection de position;
- des moyens de commande (5) du moteur sans balais (1), constitués d'un premier jeu comprenant une pluralité de commutateurs à semi-conducteurs (U1t, V1t, W1t) pour commuter les connexions entre une borne positive d'une source de puissance à courant continu (4) et une pluralité d'enroulements (U1w, V1w, W1w) du moteur sans balais (1), et d'un second jeu comprenant une pluralité de commutateurs à semi-conducteurs (X1t, Y1t, Z1t) pour commuter les connexions entre la pluralité d'enroulements et la borne négative de la source de puissance à courant continu;
- des moyens de génération de signaux de commande (20a) dans lesquels, concernant le moteur sans balais respectif (1), un signal de détection de position (provenant de 10) du moteur sans balais est appliqué à l'entrée de micro-ordinateur (20), les commutateurs (U1t, V1t, W1t, X1t, Y1t, Z1t) des moyens de commande (5) du moteur sans balais, sont commutés en marche/arrêt de manière à commuter les connexions entre les bornes positives et négatives de la source de puissance à courant continu (4), et les enroulements de moteur sans balais, tandis que la tension continue provenant de la source de puissance à courant continu est convertie en une tension alternative qui est appliquée à la pluralité d'enroulements pour faire tourner le moteur sans balais en réponse au signal de détection de position;
- un micro-ordinateur (20) pour commander les moteurs, comprenant des moyens de génération de signaux à découpage (20f-20j) présentant un rapport prédéterminé de marche/arrêt pour commuter en marche/arrêt les signaux de commande, les parties de marche des signaux de commande commutant en marche les commutateurs à semi-conducteurs constituant au moins l'un du premier ou second jeu de moyens de commande, le découpage des signaux de commande par les commutateurs à semi-conducteurs se faisant à une fréquence plus élevée que celle des signaux de commande;
- la commande de rotation s'effectuant par les signaux de commande découpés et d'autres signaux de commande, s'il y en a, étant fournis en sortie par le micro-ordinateur (20), les commutateurs à semi-conducteurs (U1t, V1t, W1t, X1t, Y1t, Z1t) du premier jeu et du second jeu des moyens de commande (5) étant commutés en marche, suivant la commande, les commutateurs à semi-conducteurs de l'un au moins des jeux étant commutés en marche/arrêt par les signaux à découpage au moment de la commutation en marche, et la tension alternative obtenue à partir de la tension continue provenant de la source de puissance à courant continu, étant soumise au découpage en même temps qu'elle est convertie en tension alternative, puis étant ensuite appliquée aux enroulements (U1w, V1w, W1w) du moteur sans balais, pour effectuer la commande de rotation de ce moteur sans balais,
caractérisé en ce que
l'autre moteur (2) est également un moteur sans balais dont la rotation est commandée par le micro-ordinateur (20) et des moyens (22, 25) identiques à ceux du premier moteur, en ayant des échanges de signaux analogues à ceux du premier moteur (1).

2. Dispositif de commande pour climatiseur,
comprenant:
- au moins deux moteurs (2, 15), l'un pour entraîner un compresseur et l'autre pour entraîner une soufflerie du climatiseur, l'un des moteurs étant un moteur sans balais (2);
- des moyens de détection de position (31, 33), relatifs au moteur sans balais (2), pour détecter la position du rotor de ce moteur sans balais de manière à fournir en sortie un signal de détection de position;
- des moyens de commande (8) du moteur sans balais (2), constitués d'un premier jeu comprenant une pluralité de commutateurs à semi-conducteurs (U3t, V3t, W3t) pour commuter les connexions entre la borne positive d'une source de puissance à courant continu (6) et une pluralité d'enroulements (U3w, V3w, W3w) du moteur sans balais (2), et d'un second jeu comprenant une pluralité de commutateurs à semi-conducteurs (X3t, Y3t, Z3t) pour commuter les connexions entre la pluralité d'enroulements et la borne négative de la source de puissance à courant continu;
- des moyens de génération de signaux de commande (34b) dans lesquels, concernant le moteur sans balais respectif (2), un signal de détection de position (provenant de 31, 33) du moteur sans balais est appliqué à l'entrée du micro-ordinateur (34), les commutateurs (U3t, V3t, W3t, X3t, Y3t, Z3t) des moyens de commande (8) du moteur sans balais sont commutés en marche/arrêt de manière à commuter les connexions entre les bornes positive et négative de la source de puissance à courant continu (6) et la pluralité d'enroulements du moteur sans balais, tandis que la tension continue provenant de la source de puissance à courant continu est convertie en une tension alternative qui est appliquée à la pluralité d'enroulements pour faire tourner le moteur sans balais en réponse au signal de détection de position;
- un micro-ordinateur (34) de commande des moteurs, comprenant des moyens de génération de signaux à découpage (34n-q) présentant un rapport prédéterminé de marche/arrêt, pour commuter en marche/arrêt les signaux de commande, les parties de marche des signaux de commande commutant en marche les commutateurs à semi-conducteurs constituant l'un au moins des premier ou second jeux de moyens de commande, le découpage des signaux de commande par les commutateurs à semi-conducteurs se faisant à une fréquence plus élevée que celle des signaux de commande;
- la commande de rotation se faisant par les signaux de commande découpés et d'autres signaux de commande, s'il y en a, étant fournis en sortie par le micro-ordinateur (34), les commutateurs à semi-conducteurs (U3t, V3t, W3t, Y3t, X3t, Z3t) du premier jeu et du second jeu de moyens de commande (8) étant commutés en marche suivant la commande, les commutateurs à semi-conducteurs de l'un au moins des jeux étant commutées en marche/arrêt par les signaux à découpage au moment de la commutation en marche, et la tension alternative obtenue à partir de la tension continue provenant de la source de puissance à courant continu, étant soumise au découpage en même temps qu'elle est convertie en tension alternative, puis étant ensuite appliquée aux enroulements (U3w, V3w, W3w) du moteur sans balais, pour effectuer la commande de rotation de ce moteur sans balais,
caractérisé en ce que
l'autre moteur (15) est un moteur à induction (15) alimenté par un dispositif de commande (16, 17) comportant une pluralité de commutateurs à semi-conducteurs (U1t, V1t, W1t, X1t, Y1t, Z1t) et comprenant des moyens de commande (16) alimentant le moteur à induction, qu'on commande en convertissant une tension continue (provenant de 4) en une tension alternative par commutation de marche/arrêt des commutateurs à semi-conducteurs qui sont commutés en marche et arrêt sous la commande du micro-ordinateur (34), pour fournir en sortie un signal de commande résultant de la conversion de la tension continue en la tension alternative présentant une tension prédéterminée et une fréquence prédéterminée, pour la commande de rotation.

3. Dispositif de commande pour climatiseur, selon la revendication 2,
caractérisé en ce que
- le micro-ordinateur (34) comprend, comme moyens de commande de rotation du moteur à induction (15) et du moteur sans balais (2), des premiers moyens de génération de signaux de commande (34a) pour générer le premier signal de commande destiné à commander les moyens de commande (16) pour l'alimentation de puissance du moteur à induction, et des seconds moyens de génération de signaux de commande (34b) pour générer le second signal de commande (figures 10k-p) destiné à commander les moyens de commande (8) pour l'alimentation du moteur sans balais,
- les premiers moyens de génération de signaux de commande (34a) comprennent des moyens de génération de signaux PWM (34g, i-I) du moteur à induction, pour générer une pluralité de signaux PWM constituant les premiers signaux de commande pour commuter en marche/arrêt les commutateurs à semi-conducteurs (U1t, V1t, W1t, X1t, Y1t, Z1t) des premiers moyens de commande (16), de manière à commander en rotation le moteur à induction (15) et à générer le minutage de marche/arrêt des signaux PWM par un minuteur (34h); et
- les seconds moyens de génération de signaux de commande (34b) comprennent des moyens de génération de signaux de commande (34m) pour générer les seconds signaux de commande destinés à commuter en marche la pluralité de moyens de commutateurs (U3t, V3t, W3t, X3t, Y3t, Z3t) du premier jeu et du second jeu des seconds moyens de commande (8) du moteur sans balais (2) en réponse au signal de détection de position (figures 10a-c) destiné à commander en rotation le moteur sans balais (2), les moyens de génération de signaux à découpage (34n-q) destinés à générer le signal à découpage (figure 10j) présentant un rapport prédéterminé de marche/arrêt à une fréquence plus élevée que celle du second signal de commande généré, et générant le minutage de marche/arrêt du signal à découpage par un minuteur (34q), et des moyens de découpage (34r) pour découper les signaux de commande destinés à commuter en marche, comme on le désire, les moyens de commutation de l'un au moins du premier et du second jeux des moyens de commande (8) du moteur sans balais (2), par le signal à découpage généré.

4. Dispositif de commande pour climatiseur, selon l'une quelconque des revendications 1 à 3,
caractérisé en ce que
le micro-ordinateur (20, 34) est conçu pour calculer le nombre de tours du moteur sans balais (1, 2) sur la base des signaux de détection de position (figures 5a-c, figures 8a-c) appliqués à l'entrée, et pour faire varier le rapport de marche/arrêt du signal à découpage (figure 5j) de façon que le nombre de tours calculé soit un nombre de tours prédéterminé.

5. Dispositif de commande pour climatiseur selon l'une quelconque des revendications 1 à 4,
caractérisé en ce que
- le micro-ordinateur (20, 34) comprend les moyens de génération de signaux de commande (20a, 34b) générant le signal de commande (figures 5n-p, figures 8j-o) pour commuter en marche, comme on le désire, la pluralité de commutateurs à semiconducteurs (U1t, V1t, W1t, X1t, Y1t, Z1t; U3t, V3t, W3t, Y3t, X3t, Z3t) de façon que le moteur sans balais (1, 2) soit entraîné en rotation en réponse aux signaux de détection de position (figures 5a-c; figures 8a-c);
- les moyens de génération de signaux à découpage (20f-i; 20j, k, I, m, o, p; 34n-q) génèrent les signaux à découpage ayant un rapport prédéterminé de marche/arrêt, à une fréquence plus élevée que celle des signaux de commande générés; et
- des moyens de découpage (20d, 20e, 34r) découpent les parties de marche des signaux de commande pour commuter en marche, comme on le désire, la pluralité de commutateurs à semi-conducteurs de l'un au moins des deux jeux, par les signaux à découpage générés.

6. Dispositif de commande pour climatiseur selon la revendication 5,
caractérisé en ce que
les moyens de découpage (20d, 20e, 34r) prennent une somme logique et/ou un produit logique du signal de commande généra et du signal à découpage généré, pour soumettre au découpage les parties de marche du signal de commande généré.
